# EUROPEAN PATENT APPLICATION

(11) **EP 4 478 779 A1**
(43) Date of publication of application: **18.12.2024**
(21) Application number: 22925955.1
(22) Date of filing: 10.02.2022
(51) Int. Cl.: H04W 28/04, H04L 1/16, H04W 72/04, H04W 72/12

(54) **TERMINAL, BASE STATION, AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2022/005516
(87) International publication number: WO 2023/152934

(57) **Abstract**

A terminal includes: a reception unit configured to receive, using downlink, control information including information for scheduling a plurality of downlink shared signals and information indicating HARQ-ACK disabling for the downlink shared signals; and a transmission unit configured to transmit Type-1 HARQ-ACK information based on whether HARQ-ACK is enabled or disabled for each of the downlink shared signals in a case where HARQ-ACK is disabled for one of the plurality of downlink shared signals indicated by the control information.

## Description

### FIELD OF THE INVENTION

The present invention relates to a terminal, a base station and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

NR release 17 discusses using a higher frequency band than a conventional release (e.g., Non-Patent Document 2). For example, applicable numerologies including subcarrier spacings, channel bandwidths, etc., physical layer design, and possible failures in actual wireless communication in the 52.6 GHz to 71 GHz frequency band have been discussed.

In addition, In NR, with respect to the high frequency band such as a band from 52.6 GHz to 71 GHz, the multi-PDSCH scheduling function is being discussed in which a plurality of PDSCHs are scheduled by a single DCI.

### Citation List

### Non-Patent Document

Non-Patent Document 1: 3GPP TS 38.300 V16.6.0 (2021-06)
Non-Patent Document 2: 3GPP TS 38.306 V16.5.0 (2021-06)

### SUMMARY OF THE INVENTION

### TECHNICAL PROBLEM

There is a problem that technical specifications for applying the wireless communication system to high frequency bands are not specified. For example, according to the conventional techniques described in non-patent document 1, or the like, in a case of applying the multi-PDSCH scheduling, there is no technical specification that specifies how to perform disabling of feedback information (specifically, HARQ-ACK information), and thus, there is a possibility that the feedback information cannot be appropriately disabled according to the conventional techniques.

The present invention has been made in view of the above points and is intended to apply the wireless communication system to high frequency bands.

### SOLUTION TO PROBLEM

According to the disclosed technology, a terminal is provided. The terminal includes: a reception unit configured to receive, using downlink, control information including information for scheduling a plurality of downlink shared signals and information indicating HARQ-ACK disabling for the downlink shared signals; and a transmission unit configured to transmit Type-1 HARQ-ACK information based on whether HARQ-ACK is enabled or disabled for each of the downlink shared signals in a case where HARQ-ACK is disabled for one of the plurality of downlink shared signals indicated by the control information.

### ADVANTAGEOUS EFFECTS OF INVENTION

According to the disclosed technique, a technique is provided which enables a radio communication system to be applied to a high frequency band.

### BRIEF DESCRIPTION OF THE DRAWINGS

[Fig. 1] is a drawing for describing a wireless communication system related to an embodiment of the present invention.
[Fig. 2] is a drawing illustrating a configuration example of a wireless communication system related to an embodiment of the present invention.
[Fig. 3] is a drawing illustrating an example of a frequency range related to an embodiment of the present invention.
[Fig. 4] is a drawing illustrating relationship between SCSs and symbol lengths.
[Fig. 5] is a first drawing for describing a method of determining a PDSCH slot window.
[Fig. 6] is a second drawing for describing a method of determining a PDSCH slot window.
[Fig. 7] is a drawing for describing a method of determining candidate reception occasions in each slot.
[Fig. 8] a drawing illustrating an example of the Type-1 HARQ-ACK codebook.
[Fig. 9] is a drawing for describing the HARQ-ACK in the multi-PDSCH scheduling.
[Fig. 10] is a drawing for describing a method of generating the Type-2 HARQ-ACK codebook.
[Fig. 11] is a drawing illustrating an example of a structure of the Type-2 HARQ-ACK codebook.
[Fig. 12] is a drawing illustrating an example of terminal capability information related to the multi-PDSCH scheduling.
[Fig. 13] is a drawing illustrating an example of terminal capability information related to disabling of the HARQ-ACK codebook in the NR non-terrestrial network.
[Fig. 14] is a drawing illustrating an example of terminal capability information related to disabling of the HARQ-ACK codebook in the NR Multicast and Broadcast Service.
[Fig. 15] is a drawing illustrating an example of a basic procedure related to an embodiment of the present invention.
[Fig. 16] is a first drawing illustrating a specific example related to a case C of an embodiment 2 of the present invention.
[Fig. 17] is a second drawing illustrating a specific example related to a case C of an embodiment 2 of the present invention.
[Fig. 18] is a drawing illustrating an example of a functional structure of a base station related to an embodiment of the present invention.
[Fig. 19] is a drawing illustrating an example of a functional structure of a terminal related to an embodiment of the present invention.
[Fig. 20] is a drawing illustrating an example of a hardware structure of the base station or the terminal related to an embodiment of the present invention.
[Fig. 21] is a drawing illustrating an example of a structure of a vehicle related to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is preconfigured, or may mean that a radio parameter indicated by the base station or the terminal is configured.

### (System configuration)

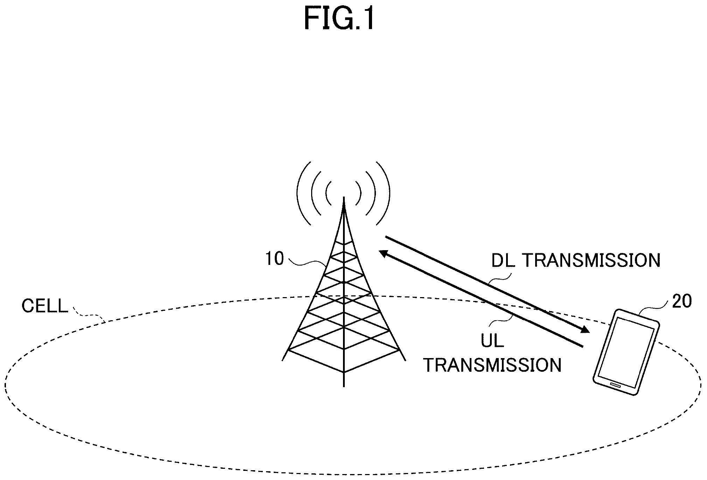

Fig. 1 is a drawing illustrating a wireless communication system related to an embodiment of the present invention.

As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

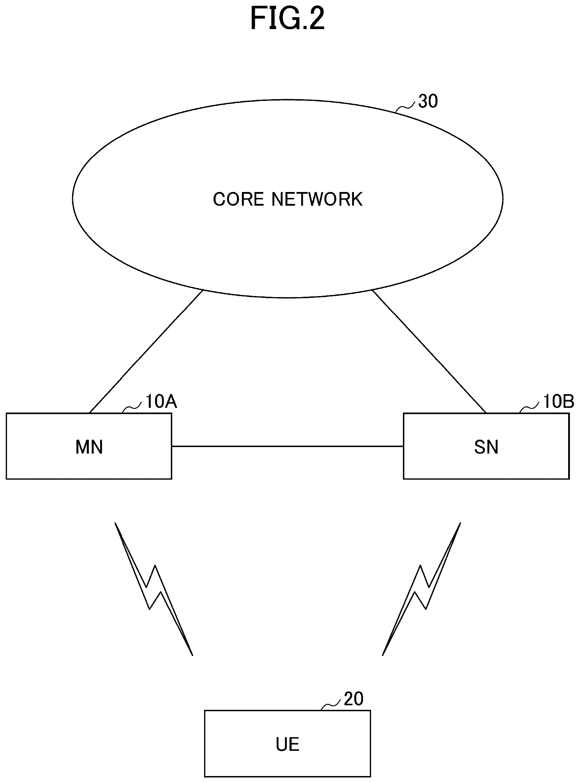

Fig. 2 is a drawing illustrating a configuration example of a wireless communication system related to an embodiment of the present invention. Fig. 2 shows an example of a configuration of a wireless communication system in a case where NR-DC (NR-Dual connectivity) is performed. As shown in Fig. 2, a base station 10A serving as an MN (Master Node) and a base station 10B serving as an SN (Secondary Node) are provided. The base station 10A and the base station 10B are each connected to a core network. The terminal 20 communicates with both the base station 10A and the base station 10B.

A cell group provided by the base station 10A serving as an MN is called an MCG (Master Cell Group), and a cell group provided by the base station 10B serving as an SN is called an SCG (Secondary Cell Group). In addition, in DC, the MCG is composed of one PCell and one or more SCells, and the SCG is composed of one PSCell (Primary SCell) and one or more SCells. Note herein that a CC (component carrier) and a cell may be used interchangeably. In addition, PCell and PSCell may be referred to as SPCell.

In a wireless communication system according to an embodiment of the present invention, in a case where an unlicensed band is used, LBT (Listen Before Talk) may be executed. The base station 10 or the terminal 20 performs signal sensing, and performs transmission in a case where the sending result is idle, and does not perform transmission in a case where the sensing result is busy. Note that, in an unlicensed band, LBT is not necessarily always performed, and there may be a case in which LBT is not performed in an unlicensed band.

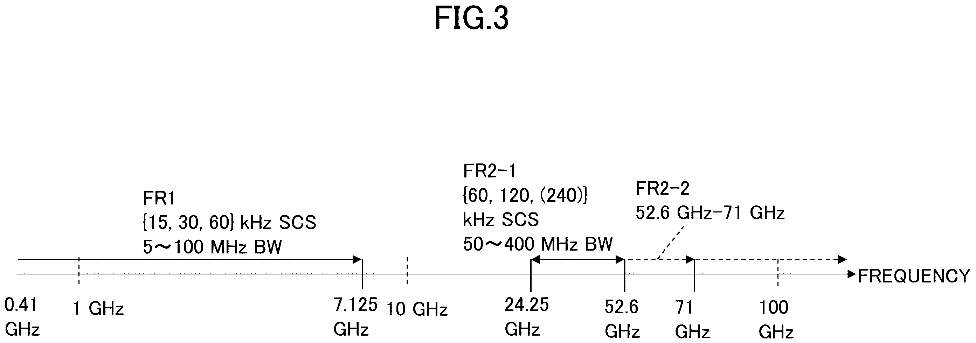

Fig. 3 is a drawing illustrating an example of a frequency range related to an embodiment of the present invention. In the 3GPP release 17 NR specifications, for example, an operation in a frequency band of 52. 6 GHz or higher is being discussed. Note that, as shown in Fig. 3, FR (Frequency range) 1 in which current operation is defined is a frequency band from 410 MHz to 7. 125 GHz, SCS (Sub carrier spacing) is 15, 30, or 60 kHz, and bandwidth is from 5 MHz to 100 MHz. FR2-1 is a frequency band from 24.25 GHz to 52.6 GHz, SCS is 60kHz, 120 kHz or 240 kHz, and the bandwidth is from 50 MHz to 400 MHz. In addition, a newly deployed frequency band FR2-2 is a frequency band from 52.6 GHz to 71 GHz.

Up to 64 SSB beams may be supported in the licensed bands and unlicensed bands in the newly deployed frequency band FR2-2. Also, 120 kHz SCS to be applied to SSB and 120 kHz SCS to be applied to initial access signals and channels, may be supported in the initial BWP (Bandwidth Part).

In addition to the 120 kHz SCS, SSB with 480 kHz SCS may be supported. Initial access supporting CORESET (Control Resource Set)#0/Type0-PDCCH included in the MIB, may be performed by the SSB. However, there may be the following limitations. For example, entry numbers of the synchronization raster may be limited. In addition, only CORESET#0/Type0-PDCCH with 480 kHz SCS may be supported in a case of SSB with 480 kHz SCS. Furthermore, SSB-CORESET multiplexing pattern 1 (SS/PBCH block and CORESET multiplexing pattern 1) may be prioritized.

Uniquely identifying the ANR (Automatic Neighbour Relation) and PCI (Physical Cell Identity) for detecting SSB with 120 kHz SCS, 480 kHz SCS, and 960 kHz SCS may be supported. In addition, CORESET#0/Type0-PDCCH included in MIB of SSB with 120 kHz SCS, 480 kHz SCS, and 960 kHz SCS, may be supported. In addition, one SCS for CORESET#0/Type0-PDCCH may be supported per SCS for SSB. For example, with respect to {SCS of SSB, SCS of CORESET#0/Type0-PDCCH}, {120,120}, {480,480}, and {960,960} may be supported.

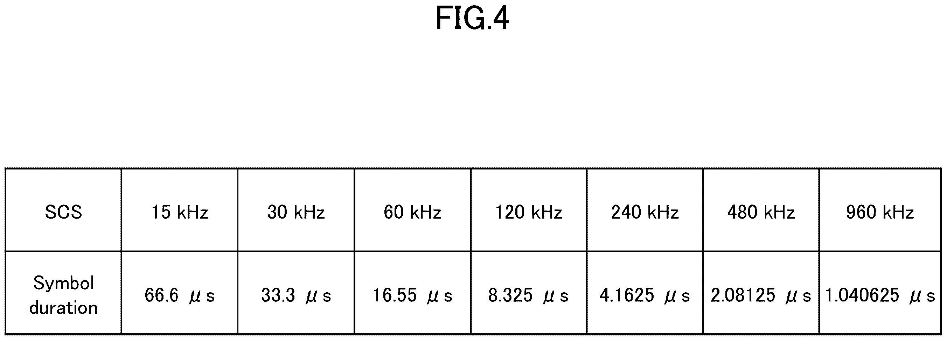

Fig. 4 is a drawing illustrating relationship between SCSs and symbol lengths. As shown in Fig. 4, the symbol length (symbol duration) becomes shorter as the SCS becomes wider. In addition, if it is assumed that the number of symbols per slot is constant (i.e., 14 symbols), the slot length becomes shorter as the SCS becomes wider.

In the wireless communication system, the terminal 20 transmits, as feedback to the base station 10, HARQ-ACK information in which HARQ-ACK information bit values are set to the HARQ-ACK codebook (may be referred to as "HARQ-ACK CB") in response to the data reception from the base station 10 via PDSCH. Note that transmission/reception of data via PDSCH may be referred to as transmission/reception of PDSCH. In addition, the information that is transmitted as feedback to the base station 10 may be referred to as a HARQ-ACK codebook. Generation of information to be transmitted as feedback to the base station 10 may be described as generation of a HARQ-ACK codebook.

However, as described above, when the slot length becomes shorter because of the use of high frequency bands, a plurality of PDSCHs are assumed to be scheduled by single DCI. Hereinafter, scheduling of a plurality of PDSCHs by scheduling by a single DCI may be described as multi-PDSCH scheduling.

### (Type-1 HARQ-ACK codebook generation)

A method of generating a Type-1 HARQ-ACK codebook will be described. In the following descriptions, a case of using PUCCH as a channel for transmitting HARQ-ACK information will be described. However, the channel for transmitting HARQ-ACK information may be PUSCH.

First, there are step A and step B shown below as an overall flow.

In step A, the terminal 20 determines HARQ-ACK occasions that indicate possible PDSCH receptions. The bit index in the HARQ-ACK occasions indicates each PDSCH reception occasion. The HARQ-ACK occasions may be referred to as a HARQ-ACK codebook.

In step B, the terminal 20 determines O^{ACK} HARQ-ACK information bit values in the HARQ-ACK occasions determined in step A. For example, if data is received normally in a given reception occasion, the corresponding bit indicates ACK.

Then, the terminal 20 transmits, to the base station 10, the HARQ-ACK information in which the HARQ-ACK information bit value is configured at the bit position of each reception occasion.

More specifically, the step A includes the following step A-1 and step A-2.

### <Step A-1>

The terminal 20 determines a PDSCH slot window, based on the configured K1 set.

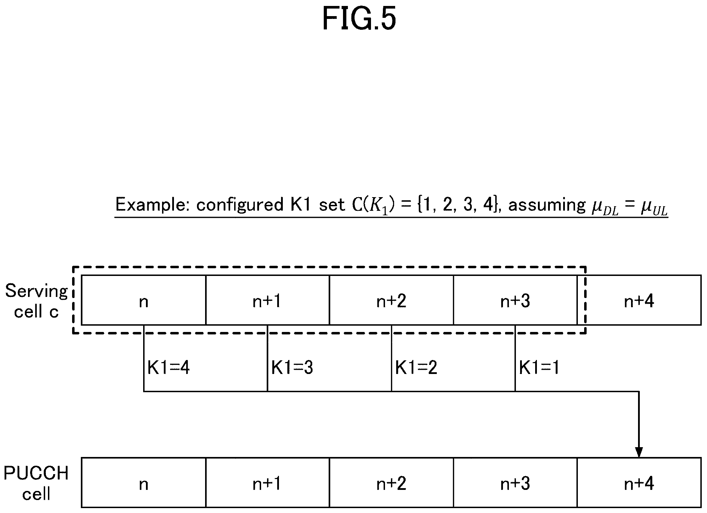

Fig. 5 illustrates an example of a PDSCH slot window in a case in which the K1 set C(K₁)={1, 2, 3, 4} and the numerologies are the same between uplink and downlink (µ_{DL}=µ_{UL}).

Fig. 5 is a first drawing for describing a method of determining a PDSCH slot window. In Fig. 5, an upper portion indicates a serving cell c for receiving PDSCH and a lower portion indicates a PUCCH cell. The same applies to the subsequent drawings.

K1 indicates a distance (number of slots) between a slot in which PDSCH is received and a slot for transmitting PUCCH in a case of viewing from the PUCCH cell. In other words, K1 is a parameter value indicating the feedback transmission timing.

In a case of Fig. 5, PUCCH is transmitted in a slot n+4 of the PUCCH cell, and thus, slots n to n+3 of the serving cell c are determined as the PDSCH slot window (slot time window for possible PDSCH reception).

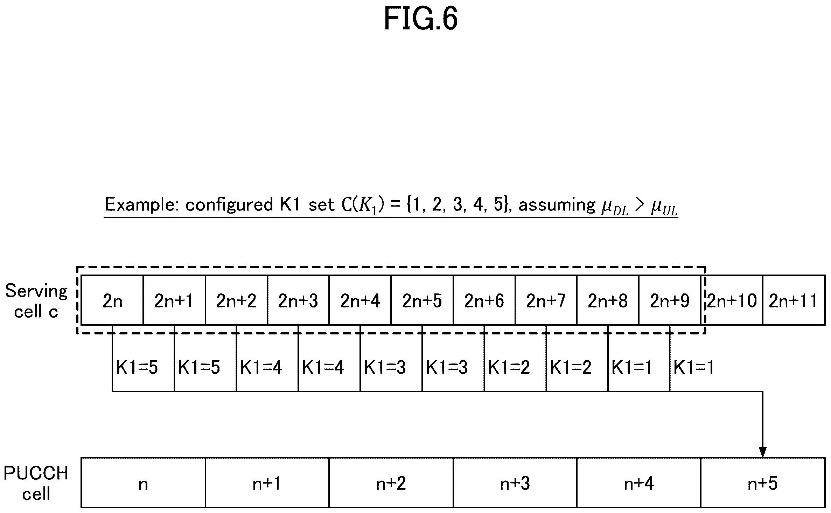

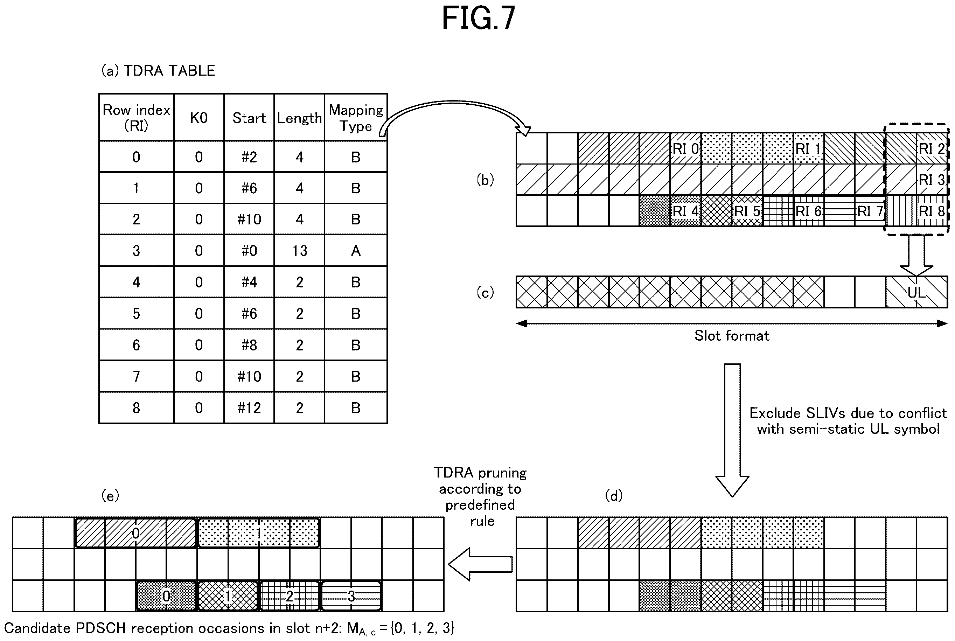

Fig. 6 is a second drawing for describing a method of determining a PDSCH slot window. Fig. 7 illustrates an example of a PDSCH slot window in a case in which the K1 set C(K₁)={1, 2, 3, 4, 5} and µ_{DL}>µ_{UL}. In a case of Fig. 7, PUCCH is transmitted in a slot n+5 of the PUCCH cell, and thus, slots 2n to 2n+9 of the serving cell c are determined as the PDSCH slot window (slot time window for possible PDSCH reception). For example, a slot 2n of the serving cell corresponds to a time position of a slot n of the PUCCH cell, and thus, using the slot length in the PUCCH cell as a reference, a slot n+5 that is 5 slots (K1=5) after the slot n is a slot for transmitting PUCCH.

### <Step A-2>

In step A-2, the terminal 20 determines candidate PDSCH reception occasions of each slot in the window determined in step A-2. Specifically, the following procedure of S1 to S3 are performed.

In S1, the candidate PDSCH reception occasions are associated with a set R (set of rows) of TDRA (Time Domain Resource Allocation) table.

In S2, a portion of allocation information (SLIV) in the TDRA table is excluded from the allocation information (SLIV) in the TDRA table, the portion being overlapped with a portion in which UL is configured according to TDD-UL-DL-ConfigurationCommon and TDD-UL-DL-ConfigDedicated.

In S3, with respect to the candidate PDSCH reception occasions overlapping in the time domain, the candidate PDSCH reception occasions are determined according to a predefined rule.

Fig. 7 is a drawing for describing a method of determining candidate reception occasions in each slot. With reference to Fig. 7, an example of determining the candidate PDSCH reception occasions in a slot n will be described. In (a) TDRA table in Fig. 7, one row corresponds to one SLIV (allocation information: indicating a start symbol and a symbol length in a slot), there are nine (9) types, and each type is identified by the row index (RI). Note that the RI is specified by DCI, and that the terminal 20 recognizes the specified SLIV as the actual PDSCH reception occasion. In addition, K1 is also specified by DCI.

In (b), SLIVs of all RIs defined in the TDRA table are indicated in a slot. For the sake of illustration convenience, 3 slots are illustrated, which indicates that there are nine (9) types of SLIV candidates in one slot.

Here, as illustrated in (c), RI2, RI3, and RI8 overlap with a UL symbol, and thus, RI2, RI3, and RI8 are excluded from the candidate PDSCH reception occasions.

The SLIVs from which RI2, RI3, and RI8 are excluded are RI0, RI1, and RI4 to RI7. As illustrated in (d) and (e), RI0 overlaps with RI4, and RI1 overlaps with RI5 and RI6. According to a predetermined rule: RI0 and RI4 become a single occasion as a candidate PDSCH reception occasion to which an index 0 is allocated; RI1 and RI5 become a single occasion as a candidate PDSCH reception occasion to which an index 1 is allocated. As a result, the candidate PDSCH reception occasions in the slot (M_{A,C}) become {0, 1, 2, 3}.

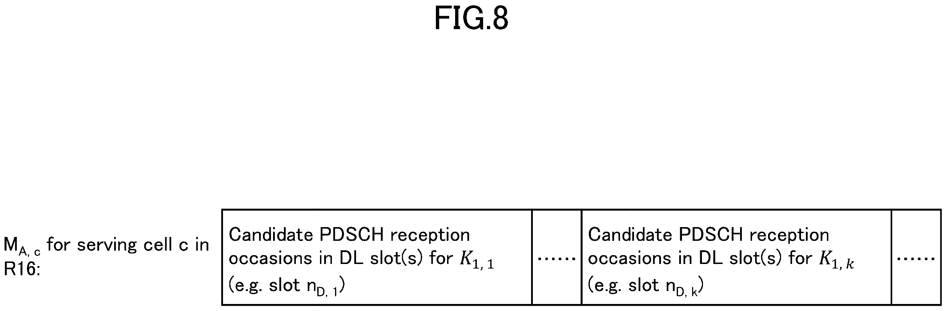

Fig. 8 is a drawing illustrating an example of the Type-1 HARQ-ACK codebook. By performing the above-described processing for each slot, as illustrated in Fig. 8, M_{A,C} including candidate PDSCH reception occasions for each slot in the PDSCH slot window is generated.

### (Multi-PDSCH/PUSCH scheduling)

Next, the multi-PDSCH scheduling will be described.

The TDRA table used in the multi-PDSCH scheduling is, for example, a table in which one or more SLIVs are included in each row. In addition, the plurality of PDSCHs that are scheduled by one DCI may be contiguous or need not be contiguous in the time domain.

More specifically, the TDRA table is expanded to indicate up to eight PDSCHs in each row. Each PDSCH has different SLIV and mapping type. The number of PDSCHs that are scheduled by one DCI is implicitly indicated by the number of valid SLIVs in a row in the TDRA table indicated by the DCI.

### (HARQ-ACK in multi-PDSCH scheduling in release 16)

In an embodiment of the present invention, the terminal 20 is enabled to transmit the HARQ-ACK feedback for a plurality of PDSCHs scheduled by the multi-PDSCH scheduling by the same PUCCH transmission.

In other words, the HARQ-ACK information for the plurality of PDSCHs scheduled by a single DCI scheduling a plurality of PDSCHs is multiplexed to a single PUCCH in a slot that is determined based on K1.

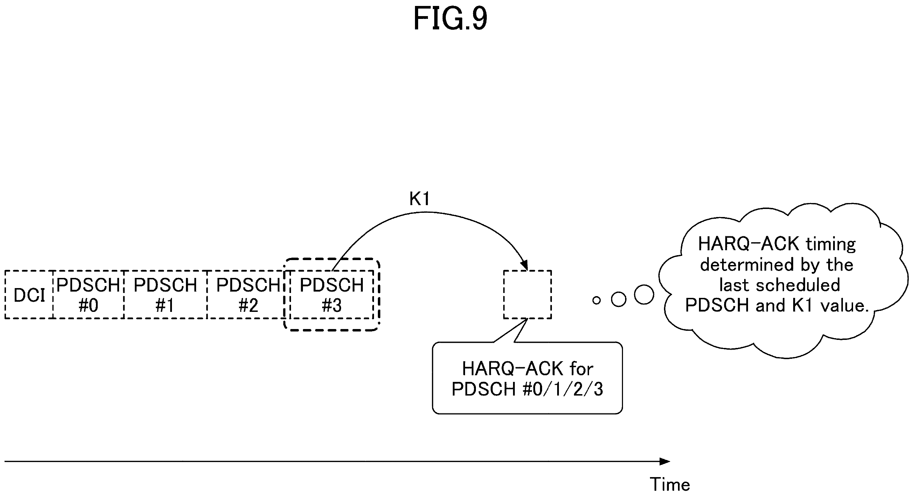

Fig. 9 is a drawing for describing the HARQ-ACK in the multi-PDSCH scheduling. Here, as illustrated in Fig. 9, K1 is a slot offset between the last PDSCH slot scheduled by the DCI and a slot that carries HARQ-ACK information for the scheduled plurality of PDSCHs.

Note that K1 is a value indicated by the PDSCH-to-HARQ_feedback timing indicator field in the DCI. In a case where the PDSCH-to-HARQ_feedback timing indicator field is not present in the DCI, K1 is a value provided by dl-DataToUL-ACK.

In addition, in an embodiment of the present invention, there are options 1, 1a, and 2 below with respect to the generation of Type-1 HARQ-ACK codebook corresponding to the DCI scheduling a plurality of PDSCHs.

### Option 1:

The terminal 20 determines the candidate PDSCH reception occasions, based on each SLIV in each row in the TDRA table and on extension of K1 set.

### Option 1a:

The terminal 20 determines the candidate PDSCH reception occasions, based on each SLIV in each row in the TDRA table.

### Option 2:

The terminal 20 determines the candidate PDSCH reception occasions, based on the last SLIV in each row in the TDRA table.

### (Type-2 HARQ-ACK codebook generation)

Next, generation of a Type-2 HARQ-ACK codebook in release 16 will be described.

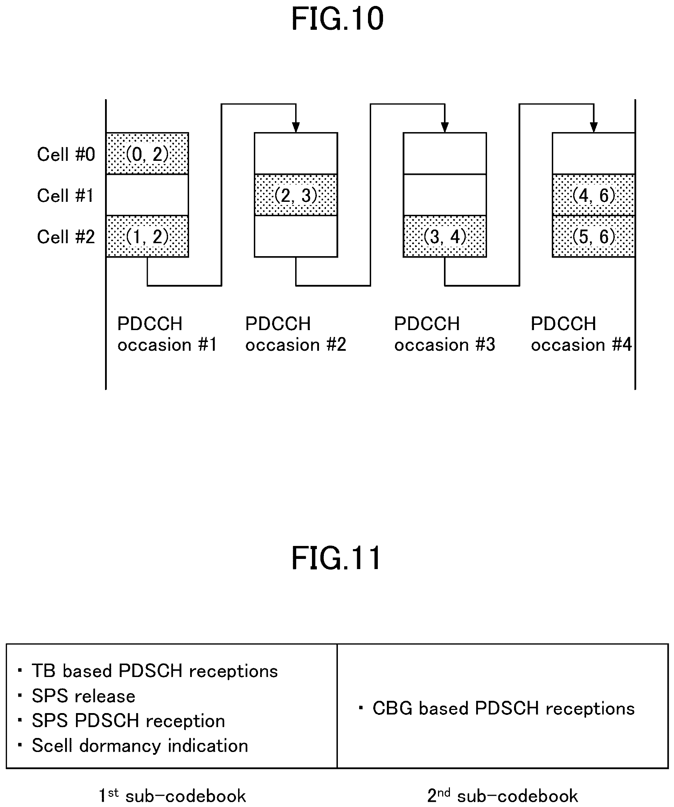

Fig. 10 is a drawing for describing a method of generating the Type-2 HARQ-ACK codebook. In an example in Fig. 10, the terminal 20 receives DCIs in cell #0 and cell #2 in PDCCH occasion #1. The terminal 20 receives a DCI in cell #1 in PDCCH occasion #2. The terminal 20 receives a DCI in cell #2 in PDCCH occasion #3. The terminal 20 receives DCIs in cell #1 and cell #2 in PDCCH occasion #4.

The Downlink Assignment Indicator (Index(DAI)) field is illustrated in parentheses of DCI in Fig. 10. The DAI field includes a counter DAI (C-DAI) and a total DAI (T-DAI).

The counter DAI indicates a value obtained by counting transmitted DCIs in the order of cells->PDCCH occasions. The total DAI indicates a total number of DCIs in PDCCH occasions, and increases as the number of PDCCH occasions increases.

The terminal 20 determines a bit position (a bit position in the Type-2 HARQ-ACK codebook) of HARQ-ACK information corresponding to a PDSCH that is scheduled by a DCI based on the bit position based on the counter DAI and the total DAI indicated by the DCI, and sets the HARQ-ACK information at the bit position. The HARQ-ACK codebook that is generated as described above is transmitted to the base station 10, and thus, the base station 10 can determine which PDSCH is to correspond to the HARQ-ACK information and can appropriately perform retransmission, or the like.

It is to be noted that, even in a case of transmitting a single PDSCH via a single DCI, the number of TBs (transport blocks) (or the number of codewords) will be two, for example, if spatial multiplexing is performed. In other words, the number of the HARQ-ACK information bits for the DCI will be two. In addition, in a case of performing the spatial bundling, the number of HARQ-ACK information bits will be one even if the number of TBs is two. In addition, in a case of performing the CBG (code block group) based transmission, the number of HARQ-ACK information bits will be the number of CBGs per TB because ACK/NACK is transmitted based on the units of CBG within the TB. According to the above-described viewpoints, the terminal 20 determines the number of HARQ-ACK bits corresponding to each PDSCH reception based on the following information elements that are transmitted from the base station 10 to the terminal 20.
- maxNrofCodeWordsScheduledByDCI
- harq-ACK-SpatialBundlingPUCCH
- PDSCH-CodeBlockGroupTransmission

### (CBG)

Fig. 11 is a drawing illustrating an example of a structure of the Type-2 HARQ-ACK codebook. In a case where CBG-based transmissions are configured in a cell in a PUCCH cell group, the Type-2 HARQ-ACK codebook is generated as a concatenation of two sub-codebooks illustrated in Fig. 11.

The first sub-codebook is a codebook for storing HARQ-ACK information bits corresponding to TB based PDSCH receptions, SPS PDSCH release, SPS PDSCH reception, and DCI format 1_1 indicating SCell dormancy.

The second sub-codebook is a codebook for storing HARQ-ACK information bits corresponding to CBG-based PDSCH receptions in the cell.

### (Agreements in release 17)

In addition, in the release 17, there are following agreements. A row of a TDRA table can indicate PDSCHs (or PUSCHs) that are in consecutive or nonconsecutive slots, by configuring {SLIV, mapping type, scheduling offset K0 (or K2)} for each PDSCH (or PUSCH) in the row of the TDRA table.

### (Type-1 HARQ-ACK codebook for multi-PDSCH scheduling)

In order to enhance generation of the Type-1 HARQ-ACK codebook corresponding to DCI that can schedule a plurality of PDSCHs, a set of candidate PDSCH reception occasions corresponding to a UL slot with HARQ-ACK transmission is determined based on a set of downlink slots and a set of SLIVs corresponding to each downlink slot belonging to the set of downlink slots.

The set of downlink slots includes all the unique downlink slots that can be scheduled by a freely-selected row index "r" of the TDRA table in DCI indicating the uplink slot as the HARQ-ACK feedback timing.

The set of SLIVs corresponding to a downlink slot (belonging to the set of downlink slots) includes at least all the SLIVs that can be scheduled within the downlink slot by a freely-selected row index "r" of the TDRA table in DCI indicating the uplink slot as the HARQ-ACK feedback timing.

In addition, in the release 17, the following items are for further study.
- Details of further pruning of the set of SLIVs
- Impact on a case where receiving of a plurality of PDSCHs in a slot is allowed. For example, processing of overlapped SLIVs from different rows in the same and different downlink slot.
- Impact on the time domain bundling, if supported

### (Type-2 HARQ-ACK codebook for multi-PDSCH scheduling)

Next, the Type-2 HARQ-ACK codebook in the multi-PDSCH scheduling in release 17 will be described. In the release 17, the proposal 1 (C-DAI/T-DAI is/are counted for each DCI) is agreed to be adopted in order to generate the Type-2 HARQ-ACK codebook corresponding to DCI that can schedule a plurality of PDSCHs.

In a case where the Type-2 HARQ-ACK codebook corresponding to DCI that can schedule a plurality of PDSCHs is generated by adopting the proposal 1 (C-DAI/T-DAI is/are counted for each DCI), at least two sub-codebooks are agreed to be generated for a PUCCH cell group.

The first sub-codebook is used for the following cases.
- DCI is not configured with CBG-based scheduling and is configured with a TDRA table containing rows that each include a single SLIV
- DCI is not configured with CBG-based scheduling, is configured with a TDRA table containing at least one row that includes a plurality of SLIVs, and schedules only a single PDSCH

The second sub-codebook is used for the following case.
- DCI is configured with a TDRA table containing at least one row that includes a plurality of SLIVs, and schedules a plurality PDSCHs

In the release 17, with respect to the second sub-codebook, the following items are for further study.
- Method of adjusting the size of the HARQ-ACK feedback corresponding to a different DCI (if needed)
- Whether or not the HARQ-ACK bits for two PDSCHs scheduled by this DCI can be included in the first sub-codebook

In addition, in the release 17, with respect to the sub-codebook, the following items are for further study.
- SPS PDSCH release, and SCell dormancy indication without scheduled PDSCH

Furthermore, in the release 17, the following items are for further study.
- Two or three sub-codebooks in a case where CBG is configured for a serving cell in the PUCCH cell group
- Impact on the time domain bundling, if supported. For example, the number of sub-codebooks including a single codebook in a case where all A/N bits are bundled into a single bit per DCI

In order to generate the Type-2 HARQ-ACK codebook corresponding to DCI than can schedule a plurality of PDSCHs, the HARQ-ACK bits corresponding to SPS PDSCH release or SCell dormancy indication without scheduled PDSCH belong to the first sub-codebook.

### (HARQ-ACK disabling)

Next, the disabling of HARQ-ACK that is being discussed in the release 17 will be described. In a case of the Type-2 HARQ-ACK codebook in the non-terrestrial network (NTN), C-DAI and T-DAI are values obtained by counting the feedback-enabled processes (that is, processes for which feedback is not disabled) alone for the DCI of PDSCH with feedback-enabled HARQ processes.

In other words, the terminal 20 is not required to transmit HARQ-ACK corresponding to the disabled HPN (HARQ Processor Number).

Here, whether or not the DCI indicating SPS release and other DCIs are to be included in the counting of C-DAI and T-DAI is an item for further study.

In addition, in a case of DCI of PDSCH with feedback-disabled HARQ processes, only one of the following options is supported by the Type-2 HARQ-ACK codebook.

### <Option 1>

Not being incremented in a case of feedback-disabled HARQ processes, the C-DAI and the T-DAI correspond to the number of feedback-enabled processes and are taken into account for the Type-2 HARQ-ACK codebook generation by the terminal 20.

### <Option 2>

The C-DAI and the T-DAI are ignored by the terminal 20 regardless of the values for the Type-2 HARQ-ACK codebook generation.

In addition, in a case of the Type-1 HARQ-ACK codebook, the terminal 20 consistently reports NACK only for the feedback-disabled HARQ processes regardless of the decoding result of the corresponding PDSCH.

### (Related terminal capability information)

Next, the conventional terminal capability information related to an embodiment of the present invention will be described.

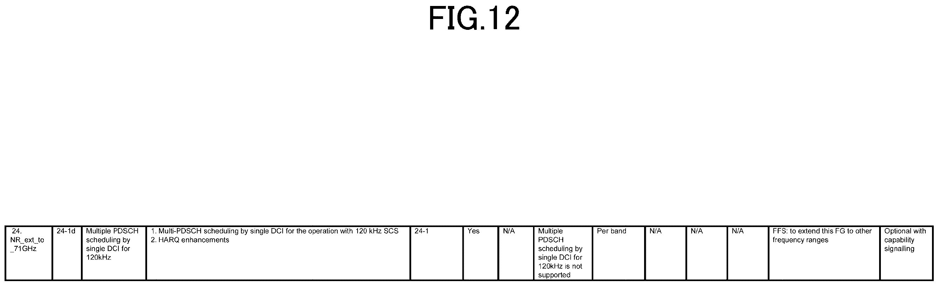

Fig. 12 is a drawing illustrating an example of terminal capability information related to the multi-PDSCH scheduling. The target frequency band of the function group (FG) related to the multi-PDSCH scheduling for the subcarrier spacing of 120 kHz is a band from 52.6 GHz to 71 GHz, and whether or not the target frequency band is to be enhanced to another frequency is for further study. For example, there is a possibility that the target frequency band of the FG may include a band from 24 GHz to 52.6 GHz.

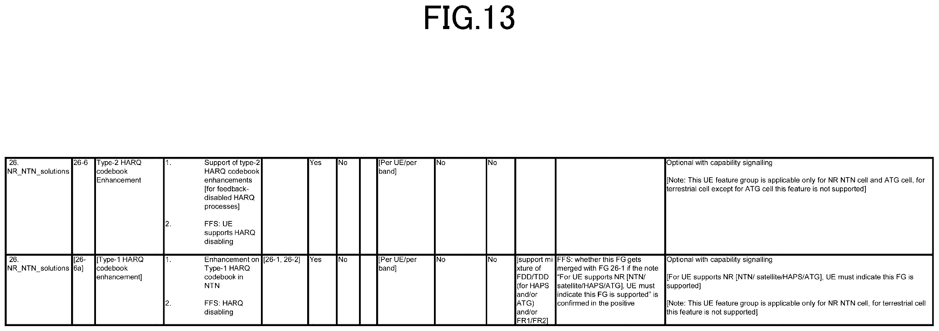

Fig. 13 is a drawing illustrating an example of terminal capability information related to disabling of the HARQ-ACK codebook in the NR non-terrestrial network. Different FG definitions are defined for the Type-1 and the Type-2 with respect to the HARQ-ACK codebook in the NR non-terrestrial network. The terminal capability information related to disabling of the HARQ-ACK codebook for each FG is for further study.

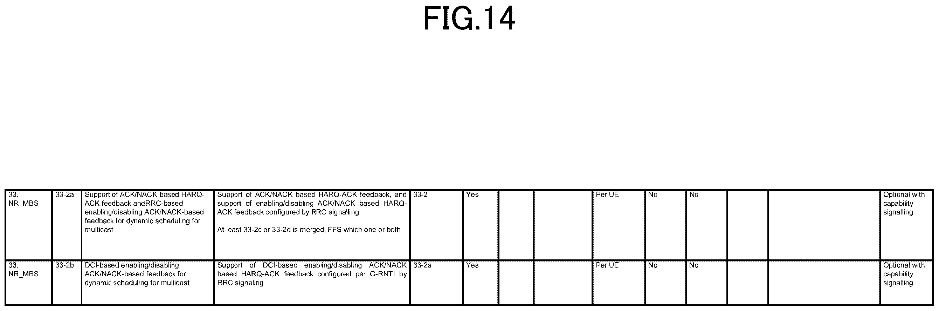

Fig. 14 is a drawing illustrating an example of terminal capability information related to disabling of the HARQ-ACK codebook in the NR Multicast and Broadcast Service. Different FGs are defined depending on the indication method of enabling/disabling with respect to the HARQ-ACK codebook in the NR Multicast and Broadcast Service (MBS).

### (Problem of conventional technique)

The conventional technique has a problem of no consideration for an operation in which the multi-PDSCH scheduling and the disabling of the HARQ feedback are combined. Specifically, there is a problem that whether or not performing the configuration of both the HARQ feedback disabling for a specific HARQ process and the multi-PDSCH scheduling is to be allowed is not clear. In addition, in a case where the simultaneous configuration is allowed, there is a problem that the impact on the HARQ-ACK codebook generation is not clear.

### (Overview of embodiment)

Therefore, in an embodiment of the present invention, an operation will be described in which the multi-PDSCH scheduling and the disabling of the HARQ feedback are combined. Hereinafter, embodiments from an embodiment 1 to an embodiment 6 will be described as specific embodiments of the present invention.

### (Basic operation)

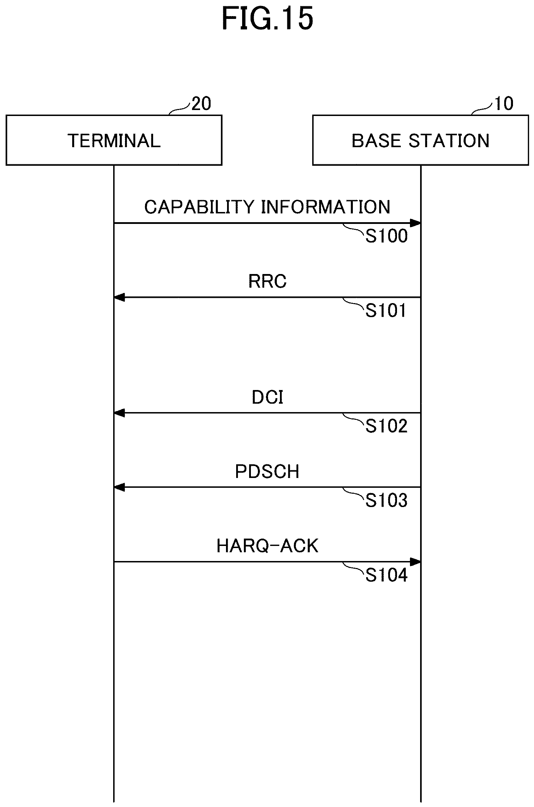

Fig. 15 is a drawing illustrating an example of a basic procedure related to an embodiment of the present invention.

In S100, the terminal 20 transmits capability information (UE capability) to the base station 10. The base station 10 can determine, for example, the content of the information to be transmitted to the terminal 20 in the following S101 and S102 based on the capability information.

In S101, the base station 10 transmits configuration information to the terminal 20 via an RRC message, and the terminal 20 receives the configuration information. The configuration information is, for example, configuration information related to a K1 set and a TDRA table as described below. Both the K1 set and the TDRA table may be indicated from the base station 10 to the terminal 20, or may be predetermined by technical specifications or the like, and the base station 10 and the terminal 20 may use the predetermined K1 set and TDRA table. In addition, the TDRA table may be referred to as time domain resource assignment configuration information.

In S102, the base station 10 transmits, to the terminal 20, scheduling (allocation information) for a plurality of PDSCHs via a DCI, and the terminal 20 receives the DCI. In addition, the DCI also includes information related to uplink resources for transmitting HARQ-ACK information.

In S103, the terminal 20 receives the PDSCHs based on the scheduling information in the DCI and transmits the HARQ-ACK information to the base station 10 in S104. The base station 10 receives the HARQ-ACK information.

### (Embodiment 1)

In this embodiment, an example will be described in which whether or not performing the configuration of both the HARQ feedback disabling for a specific HARQ process and the multi-PDSCH scheduling is to be allowed is clarified.

### <Proposal 1>

The terminal 20 may assume that a case does not exist in which multi-PDSCH scheduling is configured for a cell and the HARQ feedback is configured to be disabled for the HPN of the same cell.

In addition, the terminal 20 may assume that a case does not exist in which multi-PDSCH scheduling is configured for a cell and the HARQ feedback is configured to be disabled for any HPN of any cell within the same PUCCH cell group.

It is to be noted that "multi-PDSCH scheduling is configured" may mean that a TDRA table including at least one row with a plurality of SLIVs is configured.

### <Proposal 2>

The terminal 20 may assume that a case does not exist in which the HARQ feedback is configured to be disabled for an HPN and the HPN is allocated to a PDSCH that is scheduled by a multi-PDSCH scheduling DCI.

The above-described assumption may mean that the HPN for which the HARQ feedback is configured to be disabled should not be scheduled by the multi-PDSCH scheduling DCI but should be scheduled by a single-PDSCH scheduling DCI.

### <Proposal 3>

The terminal 20 may assume that a case does not exist in which a plurality of (valid) PDSCHs are scheduled by a single DCI and an HPN of one of the plurality of scheduled PDSCHs is configured to disable the HARQ feedback.

The above-described assumption may mean that, in a case where the multi-PDSCH scheduling DCI schedules only one (valid) PDSCH, an HPN of the one (valid) PDSCH can be configured to disable the HARQ feedback.

In addition, the above-described assumption may mean that, in a case where the multi-PDSCH scheduling DCI schedules a plurality of (valid) PDSCHs, all of the HPNs of the (valid) PDSCHs can be configured to enable the HARQ feedback.

### <Proposal 4>

In a case where a plurality of (valid) PDSCHs are scheduled by a single DCI, an HPN of one of the plurality of scheduled PDSCHs may be allowed to be configured to disable the HARQ feedback.

In addition, in a case where a plurality of (valid) PDSCHs are scheduled by a single DCI, the terminal 20 may assume that HPNs of the plurality of (valid) PDSCHs have the same HARQ feedback enabling/disabling configuration.

The above-described assumption may mean that a case is an error case in which, although some of HPNs of the plurality of (valid) PDSCHs are configured to enable the HARQ feedback, other HPNs of the plurality of (valid) PDSCHs are configured to disable the HARQ feedback.

The terminal 20 may report the limited terminal capability information to the base station 10 as described in one of the following options.

### <Option 1>

The terminal capability information of FG24-1d may be limited to the use in the terrestrial cell and/or unicast transmissions.

### <Option 2>

FG26-6 (and/or 26-6a) may be limited to a case in which the multi-PDSCH scheduling is not configured. It is to be noted that "multi-PDSCH scheduling is not configured" may mean that "FG24-1d is not supported".

### <Option 3>

FG33-2a (and/or 33-2b) may be limited to a case in which the multi-PDSCH scheduling is not configured. It is to be noted that "multi-PDSCH scheduling is not configured" may mean that "FG24-1d is not supported".

### <Option 4>

An HPN used for the multi-PDSCH scheduling may be limited to be used for unicast transmissions.

### <Option 5>

An HPN used for multicast transmissions may be incapable of being used for the multi-PDSCH scheduling.

It is to be noted that the options from the option 1 to the option 3 can provide the same advantageous effects as those of the above-described proposal 1. In addition, the option 4 and the option 5 can provide the same advantageous effects as those of the above-described proposal 2.

It is to be noted that FG24-1d may be a "terminal function for supporting the multi-PDSCH scheduling".

In addition, FG26-6 (and/or 26-6a) may be a "terminal function (in a case of NTN) for supporting the HARQ feedback disabling".

In addition, FG33-2a (and 33-2b) may be a "terminal function (in a case of MBS) for supporting the HARQ feedback disabling".

According to the above-described embodiment, whether or not performing the configuration of both the HARQ feedback disabling for a specific HARQ process and the multi-PDSCH scheduling is to be allowed can be clarified.

### (Embodiment 2)

In this embodiment, an example of a HARQ feedback operation for a case in which the multi-PDSCH scheduling and the HARQ feedback disabling are combined will be described.

With respect to a case in which the multi-PDSCH scheduling and the HARQ feedback disabling are both configured (in the same cell), possible cases will be described as below.

### <Case A>

The terminal 20 may perform an operation described in one of the following options in a case where a single PDSCH scheduled by a single-PDSCH scheduling DCI is transmitted.

### <Option A-1>

The terminal 20 may be required to report HARQ-ACK regardless of whether the HPN is configured to enable the HARQ feedback or is configured to disable the HARQ feedback. It is to be noted that the terminal 20 may determine ACK/NACK based on the actual decoding result in a case where the HPN is configured to disable the HARQ feedback.

### <Option A-2>

The terminal 20 may determine whether or not to report HARQ-ACK based on whether the HPN is configured to enable the HARQ feedback or is configured to disable the HARQ feedback.

### <Case B>

The terminal 20 may perform an operation described in one of the following options in a case where a single (valid) PDSCH scheduled by a multi-PDSCH scheduling DCI is transmitted.

### <Option B-1>

The terminal 20 may perform an operation that is the same as in the option A-1 in the case A.

### <Option B-2>

The terminal 20 may perform an operation that is the same as in the option A-2 in the case A.

### <Case C>

The terminal 20 may perform an operation described in one of the following options in a case where a plurality (valid) PDSCHs scheduled by a multi-PDSCH scheduling DCI are transmitted.

### <Option C-1>

The terminal 20 may be required to report HARQ-ACKs for all of the PDSCHs regardless of whether an HPN of a PDSCH is configured to enable the HARQ feedback or is configured to disable the HARQ feedback. It is to be noted that the terminal 20 may determine ACK/NACK based on the actual decoding result in a case where the HPN is configured to disable the HARQ feedback.

### <Option C-2>

The terminal 20 may be required to report HARQ-ACKs for all of the PDSCHs scheduled by a single DCI in a case where one of the HPNs of PDSCHs is configured to enable the HARQ feedback. In addition, the terminal 20 is not required to report HARQ-ACKs for all of the PDSCHs in a case where all of the HPNs of PDSCHs are configured to disable the HARQ feedback.

It is to be noted that the terminal 20 may determine ACK/NACK based on the actual decoding result in a case where one of the HPNs of PDSCHs supports HARQ and the HPN is configured to disable the HARQ feedback. In addition, the terminal 20 may report nothing or may report NACK regardless of the actual decoding result in a case where all of the HPNs of PDSCHs are configured to disable the HARQ feedback.

### <Option C-3>

The terminal 20 is not required to report HARQ-ACKs for all of the PDSCHs scheduled by a single DCI in a case where one of the HPNs of PDSCHs is configured to disable the HARQ feedback. In addition, the terminal 20 may report HARQ-ACKs for all of the PDSCHs in a case where all of the HPNs of PDSCHs are configured to enable the HARQ feedback.

It is to be noted that, in a case where one of the HPNs of PDSCHs is configured to disable the HARQ feedback, the terminal 20 may report nothing or report NACK regardless of the actual decoding result for each of the PDSCHs in which an HPN that is configured to enable the HARQ feedback is included.

### <Option C-4>

The terminal 20 may determine, for each PDSCH, whether or not to report HARQ-ACK based on whether the HPN is configured to enable the HARQ feedback or is configured to disable the HARQ feedback. It is to be noted that the terminal 20 may report nothing or may report NACK regardless of the actual decoding result in a case where an HPN is configured to disable the HARQ feedback.

A specific example in the above-described case C will be described.

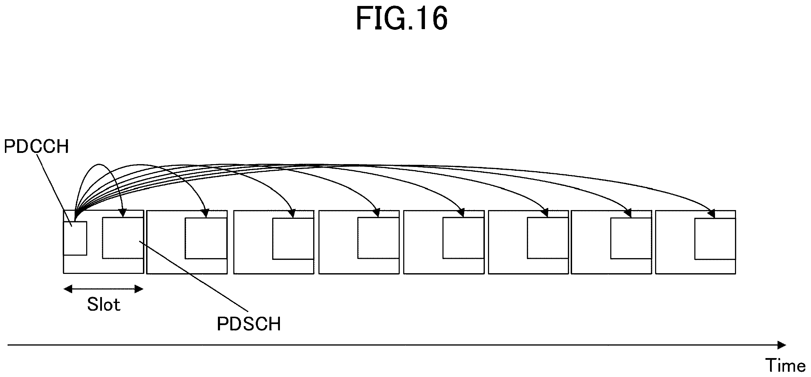

Fig. 16 is a first drawing illustrating a specific example related to a case C of an embodiment 2 of the present invention. A case is assumed in which eight PDSCHs are scheduled by a single PDCCH. HPNs from HPN 1 to HPN 8 are allocated in the ascending order to corresponding PDSCHs. The HARQ feedback enabling/disabling is configured as described below.
Enabled: HPN 1/2/3/4
Disabled: HPN 5/6/7/8

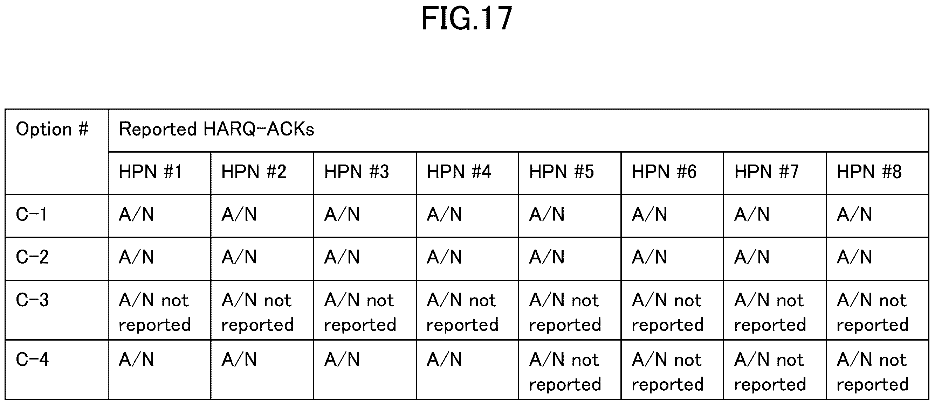

Fig. 17 is a second drawing illustrating a specific example related to a case C of an embodiment 2 of the present invention. Fig. 17 illustrates an operation result of each option in the case C. "A/N" means that ACK or NACK is to be reported. "A/N not reported" means that nothing is to be reported.

Any combination using options A-1/A-2 of the case A, options B-1/B-2 of the case B, and options C-1/C-2/C-3/C-4 of the case C is available. The most promising combinations are as follows.
- Option A-1 + option B-1 + option C-1 => option 1
- Option A-2 + option B-1 + option C-1 => option 2
- Option A-2 + option B-2 + option C-1 => option 3
- Option A-2 + option B-2 + option C-2 => option 4
- Option A-2 + option B-2 + option C-3 => option 5
- Option A-2 + option B-2 + option C-4 => option 6

The terminal 20 that performs an operation of option 1 is required to report HARQ-ACK for PDSCH in any case regardless of whether an HPN is configured to enable the HARQ feedback or is configured to disable the HARQ feedback.

The terminal 20 that performs an operation of option 2 determines whether or not to report HARQ-ACK in a case of case A based on whether the HPN is configured to enable the HARQ feedback or is configured to disable the HARQ feedback.

In addition, the terminal 20 that performs an operation of option 2 reports HARQ-ACK in a case of case B and case C regardless of whether the HPN is configured to enable the HARQ feedback or is configured to disable the HARQ feedback.

The terminal 20 that performs an operation of option 3 determines whether or not to report HARQ-ACK in a case of case A based on whether the HPN is configured to enable the HARQ feedback or is configured to disable the HARQ feedback.

In addition, the terminal 20 that performs an operation of option 3 determines whether or not to report HARQ-ACK for a single (valid) PDSCH in a case of case B based on whether the HPN is configured to enable the HARQ feedback or is configured to disable the HARQ feedback.

In addition, the terminal 20 that performs an operation of option 3 reports HARQ-ACK in a case of case C regardless of whether the HPN is configured to enable the HARQ feedback or is configured to disable the HARQ feedback.

The terminal 20 that performs an operation of option 4 determines whether or not to report HARQ-ACK in a case of case A based on whether the HPN is configured to enable the HARQ feedback or is configured to disable the HARQ feedback.

In addition, the terminal 20 that performs an operation of option 4 determines whether or not to report HARQ-ACK for a single (valid) PDSCH in a case of case B based on whether the HPN is configured to enable the HARQ feedback or is configured to disable the HARQ feedback.

In addition, the terminal 20 that performs an operation of option 4 reports HARQ-ACKs for all of the PDSCHs scheduled by a single DCI in a case of case C in a case where one of the HPNs of PDSCHs is configured to enable the HARQ feedback. In addition, the terminal 20 that performs an operation of option 4 does not report HARQ-ACKs for all of the PDSCHs in a case where all of the HPNs of PDSCHs are configured to disable the HARQ feedback.

The terminal 20 that performs an operation of option 5 determines whether or not to report HARQ-ACK in a case of case A based on whether the HPN is configured to enable the HARQ feedback or is configured to disable the HARQ feedback.

In addition, the terminal 20 that performs an operation of option 5 determines whether or not to report HARQ-ACK for a single (valid) PDSCH in a case of case B based on whether the HPN is configured to enable the HARQ feedback or is configured to disable the HARQ feedback.

In addition, the terminal 20 that performs an operation of option 5 does not report HARQ-ACKs for all of the PDSCHs scheduled by a single DCI in a case of case C in a case where one of the HPNs of PDSCHs is configured to disable the HARQ feedback. In addition, the terminal 20 that performs an operation of option 5 reports HARQ-ACKs for all of the PDSCHs in a case where all of the HPNs of the PDSCHs are configured to enable the HARQ feedback.

The terminal 20 that performs an operation of option 6 determines whether or not to report HARQ-ACK in a case of case A based on whether the HPN is configured to enable the HARQ feedback or is configured to disable the HARQ feedback.

In addition, the terminal 20 that performs an operation of option 6 determines whether or not to report HARQ-ACK for a single (valid) PDSCH in a case of case B based on whether the HPN is configured to enable the HARQ feedback or is configured to disable the HARQ feedback.

In addition, the terminal 20 that performs an operation of option 6 determines whether or not to report HARQ-ACK for each PDSCH in a case of case C based on whether the HPN is configured to enable the HARQ feedback or is configured to disable the HARQ feedback.

According to an embodiment of the present invention, a HARQ feedback operation for a case in which the multi-PDSCH scheduling and the HARQ feedback disabling are combined is clarified.

### (Embodiment 3)

In this embodiment, an example will be described in which the terminal 20 that performs an operation of each option of an embodiment 2 generates the Type-2 HARQ-ACK codebook by using a method that is not accompanied by the time domain bundling. It is to be noted that the time domain bundling will be described together with an embodiment 5.

In a case of the terminal 20 that performs an operation of an option 1 of an embodiment 2, a rule may be reused that is specified for the generation of the HARQ-ACK codebook for the multi-PDSCH scheduling that is agreed in the release 17.

In this case, the terminal 20 may determine ACK/NACK based on the actual decoding result in a case where the HPN is configured to enable the HARQ feedback.

### <First sub-codebook of option 2>

The terminal 20 that performs an operation of an option 2 of an embodiment 2 generates the first sub-codebook as described below.

### <Option 2-1>

DCI related to the first sub-codebook may be described as below.
- Single-PDSCH scheduling DCI that schedules PDSCH with HARQ feedback enabled HPN
- Multi-PDSCH scheduling DCI that schedules only one (valid) PDSCH
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- ACK/NACK for the Multi-PDSCH scheduling DCI that schedules only one (valid) PDSCH
- ACK/NACK for DCI indicating SPS release or DCI indicating Scell dormancy (and other DCIs that do not schedule PDSCH)

The C-DAI/T-DAI included in the first sub-codebook may be C-DAI/T-DAI as described below. In other words, in a case of: single-PDSCH scheduling DCIs that schedule PDSCH with HARQ feedback enabled HPN; multi-PDSCH scheduling DCIs that schedule only one (valid) PDSCH; and other DCIs that do not schedule PDSCH (for example, DCI for SPS release, DCI for indicating Scell dormancy, or the like), C-DAI/T-DAI included in the first sub-codebook is/are a number(s) obtained by counting: single-PDSCH scheduling DCIs that schedule PDSCH with HARQ feedback enabled HPN; multi-PDSCH scheduling DCIs that schedule only one (valid) PDSCH; and other DCIs that do not schedule PDSCH (for example, DCI for SPS release, DCI for indicating Scell dormancy, or the like).

In a case of single-PDSCH scheduling DCIs that schedule PDSCH with HARQ feedback disabled HPN, C-DAI/T-DAI included in the first sub-codebook may be C-DAI/T-DAI as described in one of the following proposals.

### <Proposal 1>

C-DAI/T-DAI included in the first sub-codebook may be a number(s) obtained by counting: single-PDSCH scheduling DCIs that schedule PDSCH with HARQ feedback enabled HPN; multi-PDSCH scheduling DCIs that schedule only one (valid) PDSCH; and other DCIs that do not schedule PDSCH (for example, DCI for SPS release, DCI for indicating Scell dormancy, or the like).

### <Proposal 2>

The terminal 20 may ignore C-DAI and T-DAI regardless of the values for the Type-2 HARQ-ACK codebook generation.

### <Option 2-2>

DCI related to the first sub-codebook may be DCI as described below.
- Single-PDSCH scheduling DCI
- Multi-PDSCH scheduling DCI that schedules only one (valid) PDSCH
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- NACK for the single-PDSCH scheduling DCI that schedules PDSCH with HARQ feedback disabled HPN
- ACK/NACK for the Multi-PDSCH scheduling DCI that schedules only one (valid) PDSCH
- ACK/NACK for DCI indicating SPS release or DCI indicating Scell dormancy (and other DCIs that do not schedule PDSCH)

Regarding the C-DAI/T-DAI included in the first sub-codebook, in a case of DCI related to the first sub-codebook, the C-DAI/T-DAI included in the first sub-codebook may be a number(s) obtained by counting: single-PDSCH scheduling DCIs that schedule PDSCH; multi-PDSCH scheduling DCIs that schedule only one (valid) PDSCH; and other DCIs that do not schedule PDSCH (for example, DCI for SPS release, DCI for indicating Scell dormancy, or the like).

### <Second sub-codebook of option 2>

The second sub-codebook of an option 2 may include the following contents.

The second sub-codebook of an option 2 may include multi-PDSCH scheduling DCIs that schedule a plurality (valid) PDSCHs.

In addition, the second sub-codebook of an option 2 may include HARQ-ACK information bits (M bits) included in each DCI for the second sub-codebook.

The HARQ-ACK information bits may include the following.
- ACK/NACK for the scheduled (valid) PDSCH regardless of whether the HPN is configured to enable the HARQ feedback or is configured to disable the HARQ feedback (the terminal 20 determines which of ACK or NACK is to be reported based on the actual decoding result even in a case where the HPN is configured to disable the HARQ feedback)
- NACK for the non-scheduled (or invalid) PDSCH

M is determined according to the maximum number of scheduled PDSCHs among all of the cells included in the PUCCH cell group.

The C-DAI and the T-DAI that are applied to the second sub-codebook of an option 2 may a number(s) obtained by counting the multi-PDSCH scheduling DCIs that schedule a plurality (valid) PDSCHs.

### <First sub-codebook of option 3>

The terminal 20 that performs an operation of an option 3 of an embodiment 2 generates the first sub-codebook as described below.

### <Option 3-1>

DCI related to the first sub-codebook may be DCI as described below.
- Single-PDSCH scheduling DCI that schedules PDSCH with HARQ feedback enabled HPN
- Multi-PDSCH scheduling DCI that schedules only one (valid) PDSCH with HARQ feedback enabled HPN
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- ACK/NACK for the multi-PDSCH scheduling DCI that schedules only one (valid) PDSCH with HARQ feedback enabled HPN
- ACK/NACK for DCI indicating SPS release or DCI indicating Scell dormancy (and other DCIs that do not schedule PDSCH)

The C-DAI/T-DAI included in the first sub-codebook may be C-DAI/T-DAI as described below. In other words, in a case of: single-PDSCH scheduling DCIs that schedule PDSCH with HARQ feedback enabled HPN; and other DCIs that do not schedule PDSCH (for example, DCI for SPS release, DCI for indicating Scell dormancy, or the like), the C-DAI/T-DAI included in the first sub-codebook is/are a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; and other DCIs that do not schedule PDSCH (for example, DCI for SPS release, DCI for indicating Scell dormancy, or the like).

In a case of single-PDSCH scheduling DCIs that schedule PDSCH with HARQ feedback disabled HPN, the C-DAI/T-DAI included in the first sub-codebook may be C-DAI/T-DAI as described in one of the following proposals.

### <Proposal 1>

The C-DAI/T-DAI included in the first sub-codebook may be a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; and other DCIs that do not schedule PDSCH (for example, DCI for SPS release, DCI for indicating Scell dormancy, or the like).

### <Proposal 2>

The terminal 20 may ignore C-DAI and T-DAI regardless of the values for the Type-2 HARQ-ACK codebook generation.

### <Option 3-2>

DCI related to the first sub-codebook may be DCI as described below.
- Single-PDSCH scheduling DCI that schedules PDSCH with HARQ feedback enabled HPN
- Multi-PDSCH scheduling DCI that schedules only one (valid) PDSCH
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- ACK/NACK for the multi-PDSCH scheduling DCI that schedules only one (valid) PDSCH with HARQ feedback enabled HPN
- NACK for the single-PDSCH scheduling DCI that schedules PDSCH with HARQ feedback disabled HPN
- ACK/NACK for DCI indicating SPS release or DCI indicating Scell dormancy (and other DCIs that do not schedule PDSCH)

The C-DAI/T-DAI included in the first sub-codebook may be C-DAI/T-DAI as described below. In other words, in a case of: single-PDSCH scheduling DCIs that schedule PDSCH with HARQ feedback enabled HPN; multi-PDSCH scheduling DCIs that schedule only one (valid) PDSCH; and other DCIs that do not schedule PDSCH (for example, DCI for SPS release, DCI for indicating Scell dormancy, or the like), the C-DAI/T-DAI included in the first sub-codebook is/are a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; and other DCIs that do not schedule PDSCH (for example, DCI for SPS release, DCI for indicating Scell dormancy, or the like).

In a case of single-PDSCH scheduling DCIs that schedule PDSCH with HARQ feedback disabled HPN, the C-DAI/T-DAI included in the first sub-codebook may be C-DAI/T-DAI as described in one of the following proposals.

### <Proposal 1>

The C-DAI/T-DAI included in the first sub-codebook may be a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; and other DCIs that do not schedule PDSCH (for example, DCI for SPS release, DCI for indicating Scell dormancy, or the like).

### <Proposal 2>

The terminal 20 may ignore C-DAI and T-DAI regardless of the values for the Type-2 HARQ-ACK codebook generation.

### <Option 3-3>

DCI related to the first sub-codebook may be DCI as described below.
- Single-PDSCH scheduling DCI
- Multi-PDSCH scheduling DCI that schedules only one (valid) PDSCH
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- NACK for the single-PDSCH scheduling DCI that schedules PDSCH with HARQ feedback disabled HPN
- ACK/NACK for the multi-PDSCH scheduling DCI that schedules only one (valid) PDSCH with HARQ feedback enabled HPN
- ACK/NACK for the multi-PDSCH scheduling DCI that schedules only one (valid) PDSCH with HARQ feedback enabled HPN
- ACK/NACK for DCI indicating SPS release or DCI indicating Scell dormancy (and other DCIs that do not schedule PDSCH)

Regarding the C-DAI/T-DAI included in the first sub-codebook, in a case of DCI related to the first sub-codebook, the C-DAI/T-DAI included in the first sub-codebook may be a number(s) obtained by counting: single-PDSCH scheduling DCIs that schedule PDSCH; multi-PDSCH scheduling DCIs that schedule only one (valid) PDSCH; and other DCIs that do not schedule PDSCH (for example, DCI for SPS release, DCI for indicating Scell dormancy, or the like).

### <Second sub-codebook of option 3>

The second sub-codebook of an option 3 may be the same as the second sub-codebook of an option 2.

### <First sub-codebook of option 4>

The first sub-codebook of an option 4 may be the same as the first sub-codebook of an option 3.

### <Second sub-codebook of option 4>

The terminal 20 that performs an operation of an option 4 of an embodiment 2 generates the second sub-codebook as described below.

### <Option 4-1>

The DCI related to the second sub-codebook may be DCI as described below.
- Multi-PDSCH scheduling DCI that schedules a plurality of (valid) PDSCHs including at least one PDSCH with HARQ feedback enabled HPN

The structure of the second sub-codebook may be a structure as described below.
- ACK/NACK for PDSCHs scheduled by a single DCI in a case where an HPN included in one of the PDSCHs is configured to enable the HARQ feedback

The C-DAI/T-DAI included in the second sub-codebook may be C-DAI/T-DAI as described below. That is, in a case of multi-PDSCH scheduling DCIs that schedule a plurality of (valid) PDSCHs including at least one PDSCH with HARQ feedback enabled HPN, the C-DAI/T-DAI included in the second sub-codebook is/are a number(s) obtained by counting multi-PDSCH scheduling DCIs that schedule a plurality of (valid) PDSCHs including at least one PDSCH with HARQ feedback enabled HPN.

In a case of multi-PDSCH scheduling DCIs that schedule PDSCH with all HARQ feedback disabled HPNs, the C-DAI/T-DAI included in the second sub-codebook may be C-DAI/T-DAI as described in one of the following proposals.

### <Proposal 1>

The C-DAI/T-DAI included in the second sub-codebook may be a number (s) obtained by counting multi-PDSCH scheduling DCIs that schedule a plurality of (valid) PDSCHs including at least one PDSCH with HARQ feedback enabled HPN.

### <Proposal 2>

The terminal 20 may ignore C-DAI and T-DAI regardless of the values for the Type-2 HARQ-ACK codebook generation.

### <Option 4-2>

The DCI related to the second sub-codebook may be DCI as described below.
- Multi-PDSCH scheduling DCI that schedules a plurality of (valid) PDSCHs

The structure of the second sub-codebook may be a structure as described below.
- ACK/NACK for PDSCHs scheduled by a single DCI in a case where an HPN included in one of the PDSCHs is configured to enable the HARQ feedback
- NACK for the single-PDSCH scheduling DCI in a case where all HPNs are configured to disable the HARQ feedback

In a case of DCI related to the second sub-codebook, the C-DAI/T-DAI included in the second sub-codebook may be a number(s) obtained by counting the multi-PDSCH scheduling DCIs that schedule a plurality of (valid) PDSCHs.

### <First sub-codebook of option 5>

The first sub-codebook of an option 5 may be the same as the first sub-codebook of an option 3.

### <Second sub-codebook of option 5>

The terminal 20 that performs an operation of an option 5 of an embodiment 2 generates the second sub-codebook as described below.

### <Option 5-1>

The DCI related to the second sub-codebook may be DCI as described below.
- Multi-PDSCH scheduling DCI that schedules a plurality of (valid) PDSCHs with all HARQ feedback enabled HPNs

The structure of the second sub-codebook may be a structure as described below.
- ACK/NACK for PDSCHs scheduled by a single DCI in a case where all HPNs included in PDSCHs are configured to enable the HARQ feedback

The C-DAI/T-DAI included in the second sub-codebook may be C-DAI/T-DAI as described below. That is, in a case of multi-PDSCH scheduling DCIs that schedule a plurality of (valid) PDSCHs with all HARQ feedback enabled HPNs, the C-DAI/T-DAI included in the second sub-codebook is/are a number(s) obtained by counting the multi-PDSCH scheduling DCIs that schedule a plurality of (valid) PDSCHs including all HARQ feedback enabled HPNs.

In a case of multi-PDSCH scheduling DCIs that schedule a plurality of (valid) PDSCHs including at least one PDSCH with HARQ feedback disabled HPN, the C-DAI/T-DAI included in the second sub-codebook may be C-DAI/T-DAI as described in one of the following proposals.

### <Proposal 1>

The C-DAI/T-DAI included in the second sub-codebook may be a number (s) obtained by counting the multi-PDSCH scheduling DCIs that schedule a plurality of (valid) PDSCHs with all HARQ feedback enabled HPNs.

### <Proposal 2>

The terminal 20 may ignore C-DAI and T-DAI regardless of the values for the Type-2 HARQ-ACK codebook generation.

### <Option 5-2>

The DCI related to the second sub-codebook may be DCI as described below.
- Multi-PDSCH scheduling DCI that schedules a plurality of (valid) PDSCHs

The structure of the second sub-codebook may be a structure as described below.
- ACK/NACK for PDSCHs scheduled by a single DCI in a case where all HPNs included in PDSCHs are configured to enable the HARQ feedback
- NACKs for PDSCHs scheduled by a single DCI in a case where an HPN included in a PDSCH is configured to disable the HARQ feedback

In a case of DCI related to the second sub-codebook, the C-DAI/T-DAI included in the second sub-codebook may be a number(s) obtained by counting the multi-PDSCH scheduling DCIs that schedule a plurality of (valid) PDSCHs.

### <Option 6>

The terminal 20 that performs an operation of an option 6 of an embodiment 2 may perform an operation among the following options.

### <Option 6-1>

The first sub-codebook of an option 6-1 may be the same as the first sub-codebook of an option 3.

The DCI related to the second sub-codebook may be DCI as described below.
- Multi-PDSCH scheduling DCI that schedules a plurality of (valid) PDSCHs

The structure of the second sub-codebook may be a structure as described below.
- ACK/NACK for PDSCH with HARQ feedback enabled HPN
- NACK for PDSCH with HARQ feedback disabled HPN

In a case of DCI related to the second sub-codebook, the C-DAI/T-DAI included in the second sub-codebook may be a number(s) obtained by counting the multi-PDSCH scheduling DCIs that schedule a plurality of (valid) PDSCHs.

### <Option 6-2>

The first sub-codebook of an option 6-2 may be the same as the first sub-codebook of an option 3.

The DCI related to the second sub-codebook may be DCI as described below.
- Multi-PDSCH scheduling DCI that schedules a plurality of (valid) PDSCHs including at least one PDSCH with HARQ feedback enabled HPN

The structure of the second sub-codebook may be a structure as described below.
- ACK/NACK for PDSCH with HARQ feedback enabled HPN
- NACK for PDSCH with HARQ feedback disabled HPN (the PDSCH is scheduled together with another PDSCH with HARQ feedback enabled HPN)

The C-DAI/T-DAI included in the second sub-codebook may be C-DAI/T-DAI as described below. That is, in a case of multi-PDSCH scheduling DCIs that schedule a plurality of (valid) PDSCHs including at least one PDSCH with HARQ feedback enabled HPN, the C-DAI/T-DAI included in the second sub-codebook is/are a number(s) obtained by counting multi-PDSCH scheduling DCIs that schedule a plurality of (valid) PDSCHs including at least one PDSCH with HARQ feedback enabled HPN.

In a case of multi-PDSCH scheduling DCIs that schedule PDSCH with all HARQ feedback disabled HPNs, the C-DAI/T-DAI included in the second sub-codebook may be C-DAI/T-DAI as described in one of the following proposals.

### <Proposal 1>

The C-DAI/T-DAI included in the second sub-codebook may be a number (s) obtained by counting multi-PDSCH scheduling DCIs that schedule a plurality of (valid) PDSCHs including at least one PDSCH with HARQ feedback enabled HPN.

### <Proposal 2>

The terminal 20 may ignore C-DAI and T-DAI regardless of the values for the Type-2 HARQ-ACK codebook generation.

### <Option 6-3>

The first sub-codebook of an option 6-3 may be the same as the first sub-codebook of an option 3 in which the following structure is added. The added structure will be described below.
- Multi-PDSCH scheduling DCI that schedules a plurality of (valid) PDSCHs including only one PDSCH with HARQ feedback enabled HPN

The DCI related to the second sub-codebook may be DCI as described below.
- Multi-PDSCH scheduling DCI that schedules a plurality of (valid) PDSCHs including more than one PDSCH with HARQ feedback enabled HPN

The structure of the second sub-codebook may be a structure as described below.
- ACK/NACK for PDSCH with HARQ feedback enabled HPN
- NACK for PDSCH with HARQ feedback disabled HPN (the PDSCH is scheduled together with a plurality of other PDSCHs with HARQ feedback enabled HPNs)

The C-DAI/T-DAI included in the second sub-codebook may be C-DAI/T-DAI as described below. That is, in a case of multi-PDSCH scheduling DCIs that schedule a plurality of (valid) PDSCHs including more than one PDSCH with HARQ feedback enabled HPN, the C-DAI/T-DAI included in the second sub-codebook is/are a number(s) obtained by counting multi-PDSCH scheduling DCIs that schedule a plurality of (valid) PDSCHs including more than one PDSCH with HARQ feedback enabled HPN.

In a case of multi-PDSCH scheduling DCIs that schedule PDSCH with all HARQ feedback disabled HPNs, the C-DAI/T-DAI included in the second sub-codebook may be C-DAI/T-DAI as described in one of the following proposals.

### <Proposal 1>

The C-DAI/T-DAI included in the second sub-codebook may be a number (s) obtained by counting multi-PDSCH scheduling DCIs that schedule a plurality of (valid) PDSCHs including at least one PDSCH with HARQ feedback enabled HPN.

### <Proposal 2>

The terminal 20 may ignore C-DAI and T-DAI regardless of the values for the Type-2 HARQ-ACK codebook generation.

### <Example 1>

In a case where DCI schedules a plurality of PDSCHs with all HARQ feedback disabled HPNs, an operation of the terminal 20 for each option is described below.

The terminal 20 that performs an operation of an option 6-1 reports NACK for the DCI. The terminal 20 that performs an operation of an option 6-2 or an option 6-3 reports nothing for the DCI.

### <Example 2>

In a case where DCI schedules a plurality of PDSCHs with only one HARQ feedback enabled HPN and with remaining HARQ feedback disabled HPNs, an operation of the terminal 20 for each option will be described below.

The terminal 20 that performs an operation of an option 6-1 or an option 6-2 assumes that the DCI is related to the second sub-codebook. The terminal 20 that performs an operation of an option 6-3 assumes that the DCI is related to the first codebook.

The first sub-codebook of the above-described option 6-3 specifically includes a structure of one of the following options.

### <Option 6-3A>

DCI related to the first sub-codebook may be DCI as described below.
- Single-PDSCH scheduling DCI that schedules PDSCH with HARQ feedback enabled HPN
- Multi-PDSCH scheduling DCI that schedules only one (valid) PDSCH with HARQ feedback enabled HPN
- Multi-PDSCH scheduling DCI that schedules a plurality of (valid) PDSCHs including only one PDSCH with HARQ feedback enabled HPN
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- ACK/NACK for the multi-PDSCH scheduling DCI that schedules only one (valid) PDSCH with HARQ feedback enabled HPN
- ACK/NACK for Multi-PDSCH scheduling DCI that schedules a plurality of (valid) PDSCHs including only one PDSCH with HARQ feedback enabled HPN
- ACK/NACK for DCI indicating SPS release or DCI indicating Scell dormancy (and other DCIs that do not schedule PDSCH)

The C-DAI/T-DAI included in the first sub-codebook may be C-DAI/T-DAI as described below. That is, in a case of: single-PDSCH scheduling DCIs that schedule PDSCH with HARQ feedback enabled HPN; multi-PDSCH scheduling DCIs that schedule a plurality of (valid) PDSCHs including only one PDSCH with HARQ feedback enabled HPN; and other DCIs that do not schedule PDSCH (for example, DCI for SPS release, DCI for indicating Scell dormancy, or the like), the C-DAI/T-DAI included in the first sub-codebook is/are a number(s) obtained by counting: the single-PDSCH scheduling DCIs that schedule PDSCH with HARQ feedback enabled HPN; the multi-PDSCH scheduling DCIs that schedule only one (valid) PDSCH with HARQ feedback enabled HPN; multi-PDSCH scheduling DCIs that schedule a plurality of (valid) PDSCHs including only one PDSCH with HARQ feedback enabled HPN; and other DCIs that do not schedule PDSCH (for example, DCI for SPS release, DCI for indicating Scell dormancy, or the like).

In a case of single-PDSCH scheduling DCIs that schedule PDSCH with HARQ feedback disabled HPN, the C-DAI/T-DAI included in the first sub-codebook may be C-DAI/T-DAI as described in one of the following proposals.

### <Proposal 1>

The C-DAI/T-DAI included in the first sub-codebook may be a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs including only one PDSCH with HARQ feedback enabled HPN; and other DCIs that do not schedule PDSCH (for example, DCI for SPS release, DCI for indicating Scell dormancy, or the like).

### <Proposal 2>

The terminal 20 may ignore C-DAI and T-DAI regardless of the values for the Type-2 HARQ-ACK codebook generation.

### <Option 6-3B>

DCI related to the first sub-codebook may be DCI as described below.
- Single-PDSCH scheduling DCI that schedules PDSCH with HARQ feedback enabled HPN
- Multi-PDSCH scheduling DCI that schedules only one (valid) PDSCH
- Multi-PDSCH scheduling DCI that schedules a plurality of (valid) PDSCHs including only one PDSCH with HARQ feedback enabled HPN
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- ACK/NACK for the multi-PDSCH scheduling DCI that schedules only one (valid) PDSCH with HARQ feedback enabled HPN
- NACK for the multi-PDSCH scheduling DCI that schedules only one (valid) PDSCH with HARQ feedback disabled HPN
- ACK/NACK for Multi-PDSCH scheduling DCI that schedules a plurality of (valid) PDSCHs including only one PDSCH with HARQ feedback enabled HPN
- ACK/NACK for DCI indicating SPS release or DCI indicating Scell dormancy (and other DCIs that do not schedule PDSCH)

The C-DAI/T-DAI included in the first sub-codebook may be C-DAI/T-DAI as described below. That is, in a case of: single-PDSCH scheduling DCIs that schedule PDSCH with HARQ feedback enabled HPN; multi-PDSCH scheduling DCIs that schedule only one (valid) PDSCH; multi-PDSCH scheduling DCIs that schedule a plurality of (valid) PDSCHs including only one PDSCH with HARQ feedback enabled HPN; and other DCIs that do not schedule PDSCH (for example, DCI for SPS release, DCI for indicating Scell dormancy, or the like), the C-DAI/T-DAI included in the first sub-codebook is/are a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs including only one PDSCH with HARQ feedback enabled HPN; and other DCIs that do not schedule PDSCH (for example, DCI for SPS release, DCI for indicating Scell dormancy, or the like).

In a case of single-PDSCH scheduling DCIs that schedule PDSCH with HARQ feedback disabled HPN, the C-DAI/T-DAI included in the first sub-codebook may be C-DAI/T-DAI as described in one of the following proposals.

### <Proposal 1>

The C-DAI/T-DAI included in the first sub-codebook may be a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs including only one PDSCH with HARQ feedback enabled HPN; and other DCIs that do not schedule PDSCH (for example, DCI for SPS release, DCI for indicating Scell dormancy, or the like).

### <Proposal 2>

The terminal 20 may ignore C-DAI and T-DAI regardless of the values for the Type-2 HARQ-ACK codebook generation.

### <Option 6-3C>

DCI related to the first sub-codebook may be DCI as described below.
- Single-PDSCH scheduling DCI
- Multi-PDSCH scheduling DCI that schedules only one (valid) PDSCH
- Multi-PDSCH scheduling DCI that schedules a plurality of (valid) PDSCHs including only one PDSCH with HARQ feedback enabled HPN
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- NACK for the single-PDSCH scheduling DCI that schedules PDSCH with HARQ feedback disabled HPN
- ACK/NACK for the multi-PDSCH scheduling DCI that schedules only one (valid) PDSCH with HARQ feedback enabled HPN
- ACK/NACK for the multi-PDSCH scheduling DCI that schedules only one (valid) PDSCH with HARQ feedback enabled HPN
- ACK/NACK for Multi-PDSCH scheduling DCI that schedules a plurality of (valid) PDSCHs including only one PDSCH with HARQ feedback enabled HPN
- ACK/NACK for DCI indicating SPS release or DCI indicating Scell dormancy (and other DCIs that do not schedule PDSCH)

Regarding the C-DAI/T-DAI included in the first sub-codebook, in a case of DCI related to the first sub-codebook, the C-DAI/T-DAI included in the first sub-codebook may be a number(s) obtained by counting: single-PDSCH scheduling DCIs that schedule PDSCH; multi-PDSCH scheduling DCIs that schedule only one (valid) PDSCH; multi-PDSCH scheduling DCIs that schedule a plurality of (valid) PDSCHs including only one PDSCH with HARQ feedback enabled HPN; and other DCIs that do not schedule PDSCH (for example, DCI for SPS release, DCI for indicating Scell dormancy, or the like).

For example, the terminal 20 that performs an operation of an option 6-3A reports nothing with respect to the single-PDSCH scheduling DCI that uses the HARQ feedback disabled HPN. In addition, the terminal 20 reports nothing with respect to the multi-PDSCH scheduling DCI that includes only one valid PDSCH with HARQ feedback disabled HPN.

In addition, the terminal 20 that performs an operation of an option 6-3B reports nothing with respect to the single-PDSCH scheduling DCI that uses the HARQ feedback disabled HPN. In addition, the terminal 20 reports NACK for the multi-PDSCH scheduling DCI that includes only one valid PDSCH with HARQ feedback disabled HPN.

In addition, the terminal 20 that performs an operation of an option 6-3C reports NACK for the single-PDSCH scheduling DCI that uses the HARQ feedback disabled HPN. In addition, the terminal 20 reports NACK for the multi-PDSCH scheduling DCI that includes only one valid PDSCH with HARQ feedback disabled HPN.

In a case where nothing is reported in each of the options, the codebook size can be reduced. In addition, in a case where NACK is reported, the codebook size can be fixed.

According to an embodiment of the present invention, the Type-2 HARQ-ACK codebook can be generated by using a method that is not accompanied by time domain bundling in a case where the multi-PDSCH scheduling and the HARQ feedback disabling are combined.

### (Embodiment 4)

In this embodiment, an example will be described in which the terminal 20 that performs an operation of each option of an embodiment 2 generates the Type-1 HARQ-ACK codebook by using a method that is not accompanied by the time domain bundling. It is to be noted that the time domain bundling will be described together with an embodiment 5.

### <Option 1>

The terminal 20 may reuse the procedure of generating the Type-1 HARQ-ACK codebook for a cell that is configured by the multi-PDSCH scheduling.

This may mean that, in a case where the multi-PDSCH scheduling is configured in a cell, the terminal 20 determines ACK/NACK based on the actual decoding result of a PDSCH in the cell regardless of whether the HPN is configured to enable the HARQ feedback or is configured to disable the HARQ feedback.

In addition, in a case where the multi-PDSCH scheduling is configured in a cell, the terminal 20 may determine ACK/NACK based on the actual decoding result of a PDSCH in a cell included in the same PUCCH cell group regardless of whether the HPN is configured to enable the HARQ feedback or is configured to disable the HARQ feedback.

### <Option 2>

The terminal 20 may report NACK for SLIV corresponding to the HARQ feedback disabled HPN, based on the procedure of generating the Type-1 HARQ-ACK codebook for the multi-PDSCH scheduling.

According to an embodiment of the present invention, the Type-1 HARQ-ACK codebook can be generated by using a method that is not accompanied by time domain bundling in a case where the multi-PDSCH scheduling and the HARQ feedback disabling are combined.

### (Embodiment 5)

In this embodiment, an example will be described in which the terminal 20 that performs an operation of each option of an embodiment 2 generates the Type-2 HARQ-ACK codebook by using a method that is accompanied by the time domain bundling.

### (Time domain bundling)

The time domain bundling that is agreed in the release 17 will be described. According to the time domain bundling, HARQ bundling groups are configured for collectively transmitting HARQ-ACKs corresponding to a plurality of PDSCHs.

In a case of the multi-PDSCH scheduling that uses a single DCI, a new RRC parameter (numberOfHARQ-BundlingGroups, or the like) is introduced. In the RRC parameter, the number of HARQ bundling groups whose value range is {1, 2, 4} is configured for the Type-2 HARQ-ACK codebook for each serving cell.

In a case where the RRC parameter is not configured for the serving cell, the time domain bundling of the Type-2 HARQ-ACK codebook is not enabled for the serving cell.

The maximum number of PDSCHs to be allocated to each bundling group is ceil(N_{PDSCH,MAX}/N_{HBG}). Here, N_{HBG} is a number of bundling groups configured by numberOfHARQ-BundlingGroups of the serving cell, and N_{PDSCH,MAX} is the maximum configured number of PDSCHs of the serving cell.

PDSCHs corresponding to [configured or valid] SLIVs in a row index of the TDRA table indicated by the multi-PDSCH scheduling DCI are allocated to the bundling groups. For example, in a case where N_{HBG}=4, N_{PDSCH,MAX}/N_{HBG}=8, and 5 PDSCHs are scheduled, the PDSCHs are allocated to each group by reusing the 2/1/1/1 CBG grouping method.

In a case of an empty group or a group filled with only invalid PDSCHs, HARQ-ACK bits for the bundling group are configured to be NACK (the same principle as that of a case where the time domain bundling is not configured).

The logical AND operation is applied to all of the valid PDSCHs included in the same bundling group in order to generate one HARQ-ACK bit for one group at least for one-TB case.

In a case where the number of HARQ bundling groups for a serving cell is configured to be one (1), HARQ-ACK bits corresponding to any DCI for the serving cell belong to the first sub-codebook.

At least for one-TB case, if the number of HARQ bundling groups is configured to be greater than 1 for a serving cell, the HARQ-ACK bits corresponding to the multi-PDSCH scheduling case (which means that the multi-PDSCH scheduling DCI schedules a plurality of PDSCHs) belong to the second sub-codebook.

Here, the number of HARQ-ACK bits corresponding to the multi-PDSCH scheduling DCI is determined based on the maximum value of Q values across all serving cells within the same PUCCH cell group, where Q=(the maximum configured number of PDSCHs for a cell in which numberOfHARQ-BundlingGroups is not configured) or Q=(the number of configured HARQ bundling groups for a cell in which numberOfHARQ-BundlingGroups is configured).

Next, an operation of each option described in an embodiment 2 of the present invention will be described.

In a case of the terminal 20 that performs an operation of an option 1 of an embodiment 2, a rule may be reused that is specified for the generation of the HARQ-ACK codebook for the multi-PDSCH scheduling that is agreed in the release 17.

### <First sub-codebook of option 2>

The terminal 20 that performs an operation of an option 2 of an embodiment 2 generates the first sub-codebook as described below.

### <Option 2-1>

DCI related to the first sub-codebook may be DCI as described below.
- Single-PDSCH scheduling DCI that schedules PDSCH with HARQ feedback enabled HPN
- Multi-PDSCH scheduling DCI that schedules only one (valid) PDSCH
- Multi-PDSCH scheduling DCI that schedules a plurality of (valid) PDSCHs in a cell in which only one time domain bundling group is configured
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- ACK/NACK for the Multi-PDSCH scheduling DCI that schedules only one (valid) PDSCH
- Bundled bit(s) indicating ACK/NACK corresponding to the multi-PDSCH scheduling DCI that schedules a plurality of (valid) PDSCHs in a cell in which only one time domain bundling group is configured
- ACK/NACK for DCI indicating SPS release or DCI indicating Scell dormancy (and other DCIs that do not schedule PDSCH)

The C-DAI/T-DAI included in the first sub-codebook may be C-DAI/T-DAI as described below. That is, in a case of: single-PDSCH scheduling DCIs that schedule PDSCH with HARQ feedback enabled HPN; multi-PDSCH scheduling DCIs that schedule only one (valid) PDSCH; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like), the C-DAI/T-DAI included in the first sub-codebook is/are a number(s) obtained by counting: single-PDSCH scheduling DCIs that schedule PDSCH with HARQ feedback enabled HPN; multi-PDSCH scheduling DCIs that schedule only one (valid) PDSCH; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like).

In a case of single-PDSCH scheduling DCIs that schedule PDSCH with HARQ feedback disabled HPN, the C-DAI/T-DAI included in the first sub-codebook may be C-DAI/T-DAI as described in one of the following proposals.

### <Proposal 1>

The C-DAI/T-DAI included in the first sub-codebook may be a number(s) obtained by counting: single-PDSCH scheduling DCIs that schedule PDSCH with HARQ feedback enabled HPN; multi-PDSCH scheduling DCIs that schedule only one (valid) PDSCH; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like).

### <Proposal 2>

The terminal 20 may ignore C-DAI and T-DAI regardless of the values for the Type-2 HARQ-ACK codebook generation.

### <Option 2-2>

DCI related to the first sub-codebook may be DCI as described below.
- Single-PDSCH scheduling DCI
- Multi-PDSCH scheduling DCI that schedules only one (valid) PDSCH
- Multi-PDSCH scheduling DCI that schedules a plurality of (valid) PDSCHs in a cell in which only one time domain bundling group is configured
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- NACK for the single-PDSCH scheduling DCI that schedules PDSCH with HARQ feedback disabled HPN
- ACK/NACK for the Multi-PDSCH scheduling DCI that schedules only one (valid) PDSCH
- Bundled bit(s) indicating ACK/NACK corresponding to the multi-PDSCH scheduling DCI that schedules a plurality of (valid) PDSCHs in a cell in which only one time domain bundling group is configured
- ACK/NACK for DCI indicating SPS release or DCI indicating Scell dormancy (and other DCIs that do not schedule PDSCH)

Regarding the C-DAI/T-DAI included in the first sub-codebook, in a case of DCIs related to the first sub-codebook, the C-DAI/T-DAI included in the first sub-codebook may be a number(s) obtained by counting: single-PDSCH scheduling DCIs that schedule PDSCH; multi-PDSCH scheduling DCIs that schedule only one (valid) PDSCH; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like).

### <Second sub-codebook of option 2>

The second sub-codebook of an option 2 may include the following contents.

The second sub-codebook of an option 2 may include multi-PDSCH scheduling DCIs that schedule a plurality of (valid) PDSCHs in a cell in which a plurality of time domain bundling groups are configured or in a cell in which the time domain bundling is not configured.

In addition, the second sub-codebook of an option 2 may include HARQ-ACK information bits (M bits) included in each DCI for the second sub-codebook.

M is determined by the number of time domain bundling groups in a cell, in the PUCCH cell group, in which the time domain bundling is configured and by the maximum number of scheduled PDSCHs among the cells, in the PUCCH cell group, in which the time domain bundling is not configured.

The C-DAI and the T-DAI that are applied to the second sub-codebook of an option 2 may a number(s) obtained by counting the multi-PDSCH scheduling DCIs that schedule a plurality (valid) PDSCHs in a cell in which a plurality of time domain bundling groups are configured.

### <Bundling method related to option 2>

In a case where the number of bundling groups is configured to be one (1) (that is, the time domain bundling in the first sub-codebook), the terminal 20 bundles HARQ-ACK bits of the first TB of valid PDSCHs into one bit by using the logical AND operation.

In addition, the terminal 20 enters ACK/NACK for valid PDSCH regardless of whether the HPN is configured to enable the HARQ feedback or is configured to disable the HARQ feedback. In addition, the terminal 20 enters ACK for invalid PDSCH.

In a case where up to two TBs are configured in one of the cells included in the PUCCH cell group, the terminal 20 bundles HARQ-ACK bits of the second TB of valid PDSCHs into one bit by using the logical AND operation.

In a case where all of the PDSCHs that are scheduled by a single DCI have only one TB, the terminal 20 generates NACK for the second TB.

In a case where at least one PDSCH has two TBs, the terminal 20 enters ACK/NACK for the second TB of valid PDSCHs regardless of whether the HPN is configured to enable the HARQ feedback or is configured to disable the HARQ feedback. In this case, the terminal 20 enters ACK in a case of invalid PDSCHs and in a case of PDSCHs with only one TB.

It is to be noted that "enter ACK/NACK for valid PDSCHs" can be replaced with "determine ACK/NACK based on the actual decoding result of valid PDSCHs" in this embodiment.

In addition, in a case where the number of bundling groups is greater than 1 (that is, the time domain bundling in the second sub-codebook), the terminal 20 may perform an operation according to one of the bundling methods described in the proposals below.

### <Proposal 1>

The terminal 20 may perform bundling based on the valid PDSCHs.

In a case where the number of valid PDSCHs is equal to or less than the number of bundling groups, each bundling group includes at most one valid PDSCH.

With respect to the first TB of M groups, in a case where a valid PDSCH is included in a bundling group, the terminal 20 may generate ACK/NACK for the first TB of the PDSCH for the bundling group. Otherwise, the terminal 20 may generate NACK for the bundling group.

With respect to the second TB of M groups, in a case where up to two TBs are configured and a bundling group includes two TBs of a valid PDSCH, the terminal 20 may generate ACK/NACK for the second TB for the bundling group. Otherwise, the terminal 20 may generate NACK for the bundling group.

In addition, in a case where the number of valid PDSCHs is greater than the number of bundling groups, the terminal 20 allocates the valid PDSCHs to the bundling groups. For example, in a case where N_{HBG}=4, N_{PDSCH,MAX}/N_{HBG}=8, and 5 PDSCHs are scheduled, the terminal 20 may allocate the PDSCHs to each group by reusing the 2/1/1/1 CBG grouping method.

With respect to the first TB of M groups, in a case where the bundling includes at least one valid PDSCH for each bundling group, the terminal 20 may enter ACK/NACK for the valid PDSCH. The logical AND operation is applied to the bits.

With respect to the second TB of M groups, in a case where the group includes at least one valid PDSCH with two Tbs for each bundling group, the terminal 20 may generate ACK/NACK for the second TB of the valid PDSCH with two TBs. The terminal 20 may generate NACK for a valid PDSCH with only one TB in the group. The logical AND operation is applied to the bits.

The terminal 20 may generate NACK for the bundling group in a case where each of the valid PDSCHs in the bundling group has only one TB.

### <Proposal 2>

The terminal 20 may perform bundling based on the scheduled PDSCHs.

In a case where the number of scheduled PDSCHs is equal to or less than the number of bundling groups, each bundling group includes at most one scheduled PDSCH.

With respect to the first TB of M groups, in a case where a valid PDSCH is included in a bundling group, the terminal 20 may generate ACK/NACK for the first TB of the PDSCH for the bundling group. Otherwise, the terminal 20 may generate NACK for the bundling group.

With respect to the second TB of M groups, in a case where up to two TBs are configured and a bundling group includes two TBs of a valid PDSCH, the terminal 20 may generate ACK/NACK for the second TB for the bundling group. Otherwise, the terminal 20 may generate NACK for the bundling group.

In addition, in a case where the number of scheduled PDSCHs is greater than the number of bundling groups, the terminal 20 allocates the scheduled PDSCHs to the bundling groups. For example, in a case where N_{HBG}=4, N_{PDSCH,MAX}/N_{HBG}=8, and 5 PDSCHs are scheduled, the terminal 20 may allocate the scheduled PDSCHs to each group by reusing the 2/1/1/1 CBG grouping method.

With respect to the first TB of M groups, in a case where the bundling group includes at least one valid PDSCH for each bundling group, the terminal 20 may enter ACK/NACK for the valid PDSCH. The terminal 20 may generate ACK for an invalid PDSCH. The logical AND operation is applied to the bits.

The terminal 20 may generate NACK for the bundling group in a case where each of the scheduled PDSCHs in the bundling group is invalid.

With respect to the second TB of M groups, in a case where the group includes at least one valid PDSCH with two TBs for each bundling group, the terminal 20 may generate ACK/NACK for the second TB of the valid PDSCH with two TBs. The terminal 20 may generate NACK for a valid PDSCH with only one TB in the group or for an invalid PDSCH in the group. The logical AND operation is applied to the bits.

The terminal 20 may generate NACK for the bundling group in a case where each of the valid PDSCHs with HARQ feedback enabled HPN in the bundling group has only one TB or in a case where each of the scheduled PDSCHs in the bundling group is invalid.

### <First sub-codebook of option 3>

The terminal 20 that performs an operation of an option 3 of an embodiment 2 generates the first sub-codebook as described below.

### <Option 3-1>

DCI related to the first sub-codebook may be DCI as described below.
- Single-PDSCH scheduling DCI that schedules PDSCH with HARQ feedback enabled HPN
- Multi-PDSCH scheduling DCI that schedules only one (valid) PDSCH with HARQ feedback enabled HPN
- Multi-PDSCH scheduling DCI that schedules a plurality of (valid) PDSCHs in a cell in which only one time domain bundling group is configured
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- ACK/NACK for the multi-PDSCH scheduling DCI that schedules only one (valid) PDSCH with HARQ feedback enabled HPN
- Bundled bit(s) indicating ACK/NACK corresponding to the multi-PDSCH scheduling DCI that schedules a plurality of (valid) PDSCHs in a cell in which only one time domain bundling group is configured
- ACK/NACK for DCI indicating SPS release or DCI indicating Scell dormancy (and other DCIs that do not schedule PDSCH)

The C-DAI/T-DAI included in the first sub-codebook may be C-DAI/T-DAI as described below. That is, in a case of: single-PDSCH scheduling DCIs that schedule PDSCH with HARQ feedback enabled HPN; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like), the C-DAI/T-DAI included in the first sub-codebook is/are a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like).

In a case of single-PDSCH scheduling DCIs that schedule PDSCH with HARQ feedback disabled HPN, the C-DAI/T-DAI included in the first sub-codebook may be C-DAI/T-DAI as described in one of the following proposals.

### <Proposal 1>

The C-DAI/T-DAI included in the first sub-codebook may be a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like).

### <Proposal 2>

The terminal 20 may ignore C-DAI and T-DAI regardless of the values for the Type-2 HARQ-ACK codebook generation.

### <Option 3-2>

DCI related to the first sub-codebook may be DCI as described below.
- Single-PDSCH scheduling DCI that schedules PDSCH with HARQ feedback enabled HPN
- Multi-PDSCH scheduling DCI that schedules only one (valid) PDSCH
- Multi-PDSCH scheduling DCI that schedules a plurality of (valid) PDSCHs in a cell in which only one time domain bundling group is configured
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- ACK/NACK for the multi-PDSCH scheduling DCI that schedules only one (valid) PDSCH with HARQ feedback enabled HPN
- NACK for the single-PDSCH scheduling DCI that schedules PDSCH with HARQ feedback disabled HPN
- Bundled bit(s) indicating ACK/NACK corresponding to the multi-PDSCH scheduling DCI that schedules a plurality of (valid) PDSCHs in a cell in which only one time domain bundling group is configured
- ACK/NACK for DCI indicating SPS release or DCI indicating Scell dormancy (and other DCIs that do not schedule PDSCH)

The C-DAI/T-DAI included in the first sub-codebook may be C-DAI/T-DAI as described below. That is, in a case of: single-PDSCH scheduling DCIs that schedule PDSCH with HARQ feedback enabled HPN; multi-PDSCH scheduling DCIs that schedule only one (valid) PDSCH; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like), the C-DAI/T-DAI included in the first sub-codebook is/are a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like).

In a case of single-PDSCH scheduling DCIs that schedule PDSCH with HARQ feedback disabled HPN, the C-DAI/T-DAI included in the first sub-codebook may be C-DAI/T-DAI as described in one of the following proposals.

### <Proposal 1>

The C-DAI/T-DAI included in the first sub-codebook may be a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like).

### <Proposal 2>

The terminal 20 may ignore C-DAI and T-DAI regardless of the values for the Type-2 HARQ-ACK codebook generation.

### <Option 3-3>

DCI related to the first sub-codebook may be DCI as described below.
- Single-PDSCH scheduling DCI
- Multi-PDSCH scheduling DCI that schedules only one (valid) PDSCH
- Multi-PDSCH scheduling DCI that schedules a plurality of (valid) PDSCHs in a cell in which only one time domain bundling group is configured
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- NACK for the single-PDSCH scheduling DCI that schedules PDSCH with HARQ feedback disabled HPN
- ACK/NACK for the multi-PDSCH scheduling DCI that schedules only one (valid) PDSCH with HARQ feedback enabled HPN
- ACK/NACK for the multi-PDSCH scheduling DCI that schedules only one (valid) PDSCH with HARQ feedback enabled HPN
- Bundled bit(s) indicating ACK/NACK corresponding to the multi-PDSCH scheduling DCI that schedules a plurality of (valid) PDSCHs in a cell in which only one time domain bundling group is configured
- ACK/NACK for DCI indicating SPS release or DCI indicating Scell dormancy (and other DCIs that do not schedule PDSCH)

Regarding the C-DAI/T-DAI included in the first sub-codebook, in a case of DCIs related to the first sub-codebook, the C-DAI/T-DAI included in the first sub-codebook may be a number(s) obtained by counting: single-PDSCH scheduling DCIs that schedule PDSCH; multi-PDSCH scheduling DCIs that schedule only one (valid) PDSCH; multi-PDSCH scheduling DCIs that schedule a plurality of (valid) PDSCHs in a cell in which only one time domain bundling group is configured; and other DCIs that do not schedule PDSCH (for example, DCI for SPS release, DCI for indicating Scell dormancy, or the like).

### <Second sub-codebook of option 3>

The second sub-codebook of an option 3 may be the same as the second sub-codebook of an option 2.

### <Bundling method related to option 3>

The time domain bundling method of an option 2 may be applied to an option 3.

### <First sub-codebook of option 4>

The first sub-codebook of an option 4 may be the same as the first sub-codebook of an option 3.

### <Second sub-codebook of option 4>

The terminal 20 that performs an operation of an option 4 of an embodiment 2 generates the second sub-codebook as described below.

### <Option 4-1>

The DCI related to the second sub-codebook may be DCI as described below.
- Multi-PDSCH scheduling DCI that schedules a plurality of (valid) PDSCHs including at least one PDSCH with HARQ feedback enabled HPN in a cell in which a plurality of time domain bundling groups are configured or in a cell in which the time domain bundling is not configured.

The structure of the second sub-codebook may be a structure as described below.
- Bundled bit(s) indicating ACK/NACK corresponding to the PDSCH scheduled by a single DCI that schedules PDSCH in a cell in which a plurality of time domain bundling groups are configured or in a cell in which time domain bundling is not configured in a case where an HPN included in a PDSCH is configured to enable the HARQ feedback.

The C-DAI/T-DAI included in the second sub-codebook may be C-DAI/T-DAI as described below. That is, in a case of multi-PDSCH scheduling DCIs that schedule a plurality of (valid) PDSCHs including at least one PDSCH with HARQ feedback enabled HPN in a cell in which a plurality of time domain bundling groups are configured or in a cell in which the time domain bundling is not configured, the C-DAI/T-DAI included in the second sub-codebook is/are a number(s) obtained by counting multi-PDSCH scheduling DCIs that schedule a plurality of (valid) PDSCHs including at least one PDSCH with HARQ feedback enabled HPN in a cell in which a plurality of time domain bundling groups are configured or in a cell in which the time domain bundling is not configured.

In a case of multi-PDSCH scheduling DCIs that schedule PDSCH with all HARQ feedback disabled HPNs, the C-DAI/T-DAI included in the second sub-codebook may be C-DAI/T-DAI as described in one of the following proposals.

### <Proposal 1>

The C-DAI/T-DAI included in the second sub-codebook may be a number(s) obtained by counting: Multi-PDSCH scheduling DCIs that schedule a plurality of (valid) PDSCHs including at least one PDSCH with HARQ feedback enabled HPN in a cell in which a plurality of time domain bundling groups are configured or in a cell in which the time domain bundling is not configured.

### <Proposal 2>

The terminal 20 may ignore C-DAI and T-DAI regardless of the values for the Type-2 HARQ-ACK codebook generation.

### <Option 4-2>

The DCI related to the second sub-codebook may be DCI as described below.
- Multi-PDSCH scheduling DCIs that schedule a plurality of (valid) PDSCHs in a cell in which a plurality of time domain bundling groups are configured or in a cell in which the time domain bundling is not configured

The structure of the second sub-codebook may be a structure as described below.
- Bundled bit(s) indicating ACK/NACK corresponding to the PDSCH scheduled by a single DCI that schedules PDSCH in a cell in which a plurality of time domain bundling groups are configured or in a cell in which time domain bundling is not configured in a case where an HPN included in a PDSCH is configured to enable the HARQ feedback.
- NACKs for PDSCHs that are scheduled by a single DCI in a cell in which a plurality of time domain bundling groups are configured or in a cell in which the time domain bundling is not configured in a case where all HPNs are configured to disable the HARQ feedback

In a case of DCIs related to the second sub-codebook, the C-DAI/T-DAI included in the second sub-codebook may be a number(s) obtained by counting: multi-PDSCH scheduling DCIs that schedule a plurality of (valid) PDSCHs in a cell in which a plurality of time domain bundling groups are configured or in a cell in which the time domain bundling is not configured.

### <Bundling method related to option 4>

The time domain bundling method of an option 2 may be applied to an option 4.

### <First sub-codebook of option 5>

The first sub-codebook of an option 5 may be the same as the first sub-codebook of an option 3.

### <Second sub-codebook of option 5>

The terminal 20 that performs an operation of an option 5 of an embodiment 2 generates the second sub-codebook as described below.

### <Option 5-1>

The DCI related to the second sub-codebook may be DCI as described below.
- Multi-PDSCH scheduling DCIs that schedule a plurality of (valid) PDSCHs with all HARQ feedback enabled HPNs in a cell in which a plurality of time domain bundling groups are configured or in a cell in which the time domain bundling is not configured

The structure of the second sub-codebook may be a structure as described below.
- Bundled bit(s) indicating ACK/NACK corresponding to PDSCHs scheduled by a single DCI that schedules PDSCHs in a cell in which a plurality of time domain bundling groups are configured or in a cell in which the time domain bundling is not configured in a case where all HPNs included in PDSCHs are configured to enable the HARQ feedback

The C-DAI/T-DAI included in the second sub-codebook may be C-DAI/T-DAI as described below. That is, in a case of multi-PDSCH scheduling DCIs that schedule a plurality of (valid) PDSCHs with all HARQ feedback enabled HPNs in a cell in which a plurality of time domain bundling groups are configured or in a cell in which the time domain bundling is not configured, the C-DAI/T-DAI included in the second sub-codebook is/are a number(s) obtained by counting multi-PDSCH scheduling DCIs that schedule a plurality of (valid) PDSCHs with all HARQ feedback enabled HPNs in a cell in which a plurality of time domain bundling groups are configured or in a cell in which the time domain bundling is not configured.

In a case of multi-PDSCH scheduling DCIs that schedule a plurality of (valid) PDSCHs including at least one PDSCH with HARQ feedback disabled HPN, the C-DAI/T-DAI included in the second sub-codebook may be C-DAI/T-DAI as described in one of the following proposals.

### <Proposal 1>

The C-DAI/T-DAI included in the second sub-codebook may be a number(s) obtained by counting multi-PDSCH scheduling DCIs that schedule a plurality of (valid) PDSCHs with all HARQ feedback enabled HPNs in a cell in which a plurality of time domain bundling groups are configured or in a cell in which the time domain bundling is not configured.

### <Proposal 2>

The terminal 20 may ignore C-DAI and T-DAI regardless of the values for the Type-2 HARQ-ACK codebook generation.

### <Option 5-2>

The DCI related to the second sub-codebook may be DCI as described below.
- Multi-PDSCH scheduling DCIs that schedule a plurality of (valid) PDSCHs in a cell in which a plurality of time domain bundling groups are configured or in a cell in which the time domain bundling is not configured

The structure of the second sub-codebook may be a structure as described below.
- Bundled bit(s) indicating ACK/NACK corresponding to PDSCHs scheduled by a single DCI that schedules PDSCHs in a cell in which a plurality of time domain bundling groups are configured or in a cell in which the time domain bundling is not configured in a case where HPNs included in all PDSCHs are configured to enable the HARQ feedback
- NACKs for PDSCHs that are scheduled by a single DCI in a cell in which a plurality of time domain bundling groups are configured or in a cell in which the time domain bundling is not configured in a case where an HPN included in a PDSCH is configured to disable the HARQ feedback

In a case of DCIs related to the second sub-codebook, the C-DAI/T-DAI included in the second sub-codebook may be a number(s) obtained by counting: multi-PDSCH scheduling DCIs that schedule a plurality of (valid) PDSCHs in a cell in which a plurality of time domain bundling groups are configured or in a cell in which the time domain bundling is not configured.

### <Bundling method related to option 5>

The time domain bundling method of an option 2 may be applied to an option 5.

### <Option 6>

The terminal 20 that performs an operation of an option 6 of an embodiment 2 may perform an operation among the following options.

### <Option 6-1>

The first sub-codebook of an option 6-1 may be the same as the first sub-codebook of an option 3.

The DCI related to the second sub-codebook may be DCI as described below.
- Multi-PDSCH scheduling DCIs that schedule a plurality of (valid) PDSCHs in a cell in which a plurality of time domain bundling groups are configured or in a cell in which the time domain bundling is not configured

The structure of the second sub-codebook may be a structure as described below.
- Bundled bit(s) indicating ACK/NACK corresponding to a plurality of (valid) PDSCHs that are scheduled by multi-PDSCH scheduling DCIs in a cell in which a plurality of time domain bundling groups are configured
- ACK/NACK corresponding to a plurality of (valid) PDSCHs that are scheduled by multi-PDSCH scheduling DCIs in a cell in which the time domain bundling is not configured (ACK for PDSCH with HARQ feedback enabled HPN and NACK for PDSCH with HARQ feedback disabled HPN)

In a case of DCIs related to the second sub-codebook, the C-DAI/T-DAI included in the second sub-codebook may be a number(s) obtained by counting: multi-PDSCH scheduling DCIs that schedule a plurality of (valid) PDSCHs in a cell in which a plurality of time domain bundling groups are configured or in a cell in which the time domain bundling is not configured.

### <Bundling method related to option 6-1>

In a case where the number of bundling groups is configured to be one (1) (that is, the time domain bundling in the first sub-codebook), the terminal 20 may reuse the bundling method related to an option 2.

In addition, in a case where the number of bundling groups is greater than 1 (that is, the time domain bundling in the second sub-codebook), the terminal 20 may perform an operation according to one of the bundling methods described in the proposals below.

### <Proposal 1>

The terminal 20 may perform bundling based on the valid PDSCHs with HARQ feedback enabled HPNs.

In a case where each of the PDSCHs has a HARQ feedback disabled HPN, the terminal 20 may set NACK for M HARQ-ACK bits of the first TB, and may set NACK for M HARQ-ACK bits of the second TB in the maximum case.

In a case where the number of valid PDSCHs with HARQ feedback enabled HPN is equal to or less than the number of bundling groups, each bundling group includes at most one valid PDSCH with HARQ feedback enabled HPN.

With respect to the first TB of M groups, in a case where at least one valid PDSCH with HARQ feedback enabled HPN is included in a bundling group, the terminal 20 may generate ACK/NACK for the first TB of the PDSCH for the bundling group. Otherwise, the terminal 20 may generate NACK for the bundling group.

With respect to the second TB of M groups, in a case where up to two TBs are configured and a valid PDSCH with two TBs with HARQ feedback enabled HPN is included in a bundling group, the terminal 20 may generate ACK/NACK for the second TB for the bundling group. Otherwise, the terminal 20 may generate NACK for the bundling group.

In addition, in a case where the number of valid PDSCHs with HARQ feedback enabled HPN is greater than the number of bundling groups, the terminal 20 allocates the valid PDSCHs with HARQ feedback enabled HPN to the bundling groups. For example, in a case where N_{HBG}=4, N_{PDSCH,MAX}/N_{HBG}=8, and 5 PDSCHs with HARQ feedback enabled HPN are scheduled, the terminal 20 may allocate the PDSCHs with HARQ feedback enabled HPN to each group by reusing the 2/1/1/1 CBG grouping method.

With respect to the first TB of M groups, in a case where a valid PDSCH with HARQ feedback enabled HPN is included in each bundling group, the terminal 20 may enter ACK/NACK for the valid PDSCH. The logical AND operation is applied to the bits.

With respect to the second TB of M groups, in a case where at least one valid PDSCH with two TBs with HARQ feedback enabled HPN is included in the group for each bundling group, the terminal 20 may generate ACK/NACK for the second TB of the valid PDSCH with two TBs with HARQ feedback enabled HPN. The terminal 20 may generate ACK for a valid PDSCH with HARQ feedback enabled HPN with only one TB in the group. The logical AND operation is applied to the bits.

The terminal 20 may generate NACK for the bundling group in a case where each of the valid PDSCHs in the bundling group has only one TB.

### <Proposal 2>

The terminal 20 may perform bundling based on the valid PDSCHs.

In a case where the number of valid PDSCHs is equal to or less than the number of bundling groups, each bundling group includes at most one valid PDSCH.

With respect to the first TB of M groups, in a case where at least one valid PDSCH with HARQ feedback enabled HPN is included in a bundling group, the terminal 20 may generate ACK/NACK for the first TB of the PDSCH for the bundling group. Otherwise, the terminal 20 may generate NACK for the bundling group.

With respect to the second TB of M groups, in a case where up to two TBs are configured and a valid PDSCH with two TBs with HARQ feedback enabled HPN is included in a bundling group, the terminal 20 may generate ACK/NACK for the second TB for the bundling group. Otherwise, the terminal 20 may generate NACK for the bundling group.

In addition, in a case where the number of valid PDSCHs is greater than the number of bundling groups, the terminal 20 allocates the valid PDSCHs to the bundling groups. For example, in a case where N_{HBG}=4, N_{PDSCH,MAX}/N_{HBG}=8, and 5 PDSCHs are scheduled, the terminal 20 may allocate the PDSCHs to each group by reusing the 2/1/1/1 CBG grouping method.

With respect to the first TB of M groups, in a case where at least one valid PDSCH with HARQ feedback enabled HPN is included in each bundling group, the terminal 20 may enter ACK/NACK for the valid PDSCH with HARQ feedback enabled HPN. In this case, the terminal 20 may generate ACK for a valid PDSCH with HARQ feedback disabled HPN. The logical AND operation is applied to the bits.

The terminal 20 may generate NACK for the bundling group in a case where each of the valid PDSCHs in the bundling group has a HARQ feedback disabled HPN.

With respect to the second TB of M groups, in a case where at least one valid PDSCH with two TBs with HARQ feedback enabled HPN is included in the group for each bundling group, the terminal 20 may generate ACK/NACK for the second TB of the valid PDSCH with two TBs with HARQ feedback enabled HPN. The terminal 20 may generate ACK for a valid PDSCH with HARQ feedback enabled HPN with only one TB in the group. The logical AND operation is applied to the bits.

The terminal 20 may generate NACK for the bundling group in a case where each of the valid PDSCHs in the bundling group has a HARQ feedback disabled HPN or in a case where each of the valid PDSCHs in the bundling group has only one TB.

For example, in a case of the proposal 1, group #1 is for HPN #1 and group #2 is for HPN #2. (Because the grouping is based on the PDSCHs with HARQ feedback enabled HPN.)

In a case of the proposal 2, group #1 is for HPNs from #1 to #3, and group #2 is for HPNs from #4 to #5. Next, in the first group, ACK/NACKs of HPN #1 and HPN #2 are bundled and the bit is obtained. In a case of group #2, NACK is generated.

### <Proposal 3>

The terminal 20 may perform bundling based on the scheduled PDSCHs.

In a case where the number of scheduled PDSCHs is equal to or less than the number of bundling groups, each bundling group includes at most one scheduled PDSCH.

With respect to the first TB of M groups, in a case where at least one valid PDSCH with HARQ feedback enabled HPN is included in a bundling group, the terminal 20 may generate ACK/NACK for the first TB of the PDSCH for the bundling group. Otherwise, the terminal 20 may generate NACK for the bundling group.

With respect to the second TB of M groups, in a case where up to two TBs are configured and a valid PDSCH with two TBs with HARQ feedback enabled HPN is included in a bundling group, the terminal 20 may generate ACK/NACK for the second TB for the bundling group. Otherwise, the terminal 20 may generate NACK for the bundling group.

In addition, in a case where the number of scheduled PDSCHs is greater than the number of bundling groups, the terminal 20 allocates the scheduled PDSCHs to the bundling groups. For example, in a case where N_{HBG}=4, N_{PDSCH,MAX}/N_{HBG}=8, and 5 PDSCHs are scheduled, the terminal 20 may allocate the scheduled PDSCHs to each group by reusing the 2/1/1/1 CBG grouping method.

With respect to the first TB of M groups, with respect to each bundling group, in a case where at least one valid PDSCH with HARQ feedback enabled HPN is included in the bundling group, the terminal 20 may enter ACK/NACK for the valid PDSCH with HARQ feedback enabled HPN. In this case, the terminal 20 may generate ACK for a valid PDSCH with HARQ feedback disabled HPN or for an invalid PDSCH. The logical AND operation is applied to the bits.

The terminal 20 may generate NACK for the bundling group in a case where each of the valid PDSCHs in the bundling group has a HARQ feedback disabled HPN or in a case where each of the scheduled PDSCHs in the bundling group is invalid.

With respect to the second TB of M groups, with respect to each of the bundling groups, in a case where at least one valid PDSCH with two TBs with HARQ feedback enabled HPN is included in the bundling group, the terminal 20 may generate ACK/NACK for the second TB of the valid PDSCH with two TBs with HARQ feedback enabled HPN. The terminal 20 may generate ACK for a valid PDSCH with HARQ feedback enabled HPN with only one TB in the group, for a valid PDSCH with HARQ feedback disabled HPN, or for an invalid PDSCH in the group. The logical AND operation is applied to the bits.

The terminal 20 may generate NACK for a bundling group in a case where each of the valid PDSCHs in the bundling group has a HARQ feedback disabled HPN, in a case where each of the valid PDSCHs in the bundling group has only one TB, or in a case where each of the scheduled PDSCHs in the bundling group is invalid.

### <Option 6-2>

The first sub-codebook of an option 6-2 may be the same as the first sub-codebook of an option 3.

The DCI related to the second sub-codebook may be DCI as described below.
- Multi-PDSCH scheduling DCIs that schedule a plurality of (valid) PDSCHs including at least one PDSCH with HARQ feedback enabled HPN in a cell in which a plurality of time domain bundling groups are configured or in a cell in which the time domain bundling is not configured

The structure of the second sub-codebook may be a structure as described below.
- Bundled bit(s) indicating ACK/NACK corresponding to a plurality of (valid) PDSCHs that are scheduled by multi-PDSCH scheduling DCIs for scheduling a plurality of (valid) PDSCHs including at least one PDSCH with HARQ feedback enabled HPN in a cell in which a plurality of time domain bundling groups are configured
- ACK/NACK corresponding to a plurality of (valid) PDSCHs, including at least one PDSCH with HARQ feedback enabled HPN, that are scheduled by multi-PDSCH scheduling DCIs in a cell in which the time domain bundling is not configured (ACK/NACK for PDSCH with HARQ feedback enabled HPN and NACK for PDSCHs with HARQ feedback disabled HPN (the PDSCHs are scheduled together with another PDSCH with HARQ feedback enabled HPN))

The C-DAI/T-DAI included in the second sub-codebook may be C-DAI/T-DAI as described below. That is, in a case of multi-PDSCH scheduling DCIs that schedule a plurality of (valid) PDSCHs including at least one PDSCH with HARQ feedback enabled HPN in a cell in which a plurality of time domain bundling groups are configured or in a cell in which the time domain bundling is not configured, the C-DAI/T-DAI included in the second sub-codebook is/are a number(s) obtained by counting multi-PDSCH scheduling DCIs that schedule a plurality of (valid) PDSCHs including at least one PDSCH with HARQ feedback enabled HPN in a cell in which a plurality of time domain bundling groups are configured or in a cell in which the time domain bundling is not configured.

In a case of Multi-PDSCH scheduling DCIs that schedule a plurality of (valid) PDSCHs with all HARQ feedback enabled HPNs in a cell in which a plurality of time domain bundling groups are configured or in a cell in which the time domain bundling is not configured, the C-DAI/T-DAI included in the second sub-codebook may be one of the following proposals.

### <Proposal 1>

The C-DAI/T-DAI included in the second sub-codebook may be a number(s) obtained by counting multi-PDSCH scheduling DCIs that schedule a plurality of (valid) PDSCHs including at least one PDSCH with HARQ feedback enabled HPN in a cell in which a plurality of time domain bundling groups are configured or in a cell in which the time domain bundling is not configured.

### <Proposal 2>

The terminal 20 may ignore C-DAI and T-DAI regardless of the values for the Type-2 HARQ-ACK codebook generation.

### <Bundling method related to option 6-2>

In a case where the number of bundling groups is configured to be one (1) (that is, the time domain bundling in the first sub-codebook), the terminal 20 may reuse the bundling method related to an option 2.

In addition, in a case where the number of bundling groups is greater than one (1) (that is, the time domain bundling in the second sub-codebook), the terminal 20 may reuse the bundling method related to an option 6-1.

The difference between an option 6-2 and an option 6-1 is described below. For example, in a case where a DCI schedules a plurality of PDSCHs with all HARQ feedback disabled HPNs, the bundled M bits of NACK will be reported for the DCI in the bundling method related to an option 6-1. With respect to the above-described case, the HARQ feedback for the DCI is not transmitted in the bundling method related to an option 6-2.

Therefore, "a case where each of the valid PDSCHs includes a HARQ feedback disabled HPN" as described in the "second sub-codebook bundling of an option 6-1" does not exist in the second sub-codebook bundling of an option 6-2.

### <Option 6-3>

The first sub-codebook of an option 6-3 may be the same as the first sub-codebook of an option 3 in which the following structure is added. The added structure will be described below.
- Multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured

The DCI related to the second sub-codebook may be DCI as described below.
- Multi-PDSCH scheduling DCIs that schedule a plurality of (valid) PDSCHs including a plurality of PDSCHs with HARQ feedback enabled HPN in a cell in which a plurality of time domain bundling groups are configured or in a cell in which the time domain bundling is not configured

The structure of the second sub-codebook may be a structure as described below.
- Bundled bit(s) indicating ACK/NACK corresponding to a plurality of (valid) PDSCHs that are scheduled by multi-PDSCH scheduling DCIs for scheduling a plurality of (valid) PDSCHs including at least one PDSCH with HARQ feedback enabled HPN in a cell in which a plurality of time domain bundling groups are configured
- ACK/NACK corresponding to a plurality of (valid) PDSCHs, including at least one PDSCH with HARQ feedback enabled HPN, that are scheduled by multi-PDSCH scheduling DCIs in a cell in which the time domain bundling is not configured (ACK/NACK for PDSCH with HARQ feedback enabled HPN and NACK for PDSCHs with HARQ feedback disabled HPN (the PDSCHs are scheduled together with another PDSCH with HARQ feedback enabled HPN))

The C-DAI/T-DAI included in the second sub-codebook may be C-DAI/T-DAI as described below. That is, in a case of multi-PDSCH scheduling DCIs that schedule a plurality of (valid) PDSCHs including at least one PDSCH with HARQ feedback enabled HPN in a cell in which a plurality of time domain bundling groups are configured or in a cell in which the time domain bundling is not configured, the C-DAI/T-DAI included in the second sub-codebook is/are a number(s) obtained by counting multi-PDSCH scheduling DCIs that schedule a plurality of (valid) PDSCHs including at least one PDSCH with HARQ feedback enabled HPN in a cell in which a plurality of time domain bundling groups are configured or in a cell in which the time domain bundling is not configured.

In a case of Multi-PDSCH scheduling DCIs that schedule a plurality of (valid) PDSCHs with all HARQ feedback enabled HPNs in a cell in which a plurality of time domain bundling groups are configured or in a cell in which the time domain bundling is not configured, the C-DAI/T-DAI included in the second sub-codebook may be one of the following proposals.

### <Proposal 1>

The C-DAI/T-DAI included in the second sub-codebook may be a number(s) obtained by counting multi-PDSCH scheduling DCIs that schedule a plurality of (valid) PDSCHs including at least one PDSCH with HARQ feedback enabled HPN in a cell in which a plurality of time domain bundling groups are configured or in a cell in which the time domain bundling is not configured.

### <Proposal 2>

The terminal 20 may ignore C-DAI and T-DAI regardless of the values for the Type-2 HARQ-ACK codebook generation.

The first sub-codebook of the above-described option 6-3 specifically includes a structure of one of the following options.

### <Option 6-3A>

DCI related to the first sub-codebook may be DCI as described below.
- Single-PDSCH scheduling DCI that schedules PDSCH with HARQ feedback enabled HPN
- Multi-PDSCH scheduling DCI that schedules only one (valid) PDSCH with HARQ feedback enabled HPN
- Multi-PDSCH scheduling DCI that schedules a plurality of (valid) PDSCHs in a cell in which only one time domain bundling group is configured
- Multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- ACK/NACK for the multi-PDSCH scheduling DCI that schedules only one (valid) PDSCH with HARQ feedback enabled HPN
- Bundled bit(s) indicating ACK/NACK corresponding to a plurality of (valid) PDSCHs that are scheduled by multi-PDSCH scheduling DCI that schedules a plurality of (valid) PDSCHs in a cell in which only one time domain bundling group is configured
- ACK/NACK for PDSCHs scheduled by multi-PDSCH scheduling DCI that schedules a plurality of (valid) PDSCHs including only one PDSCH with HARQ feedback enabled HPN in a cell in which a plurality of time domain bundling groups are configured or in a cell in which the time domain bundling is not configured
- ACK/NACK for DCI indicating SPS release or DCI indicating Scell dormancy (and other DCIs that do not schedule PDSCH)

The C-DAI/T-DAI included in the first sub-codebook may be C-DAI/T-DAI as described below. That is, in a case of: single-PDSCH scheduling DCIs that schedule PDSCH with HARQ feedback enabled HPN; multi-PDSCH scheduling DCIs that schedule a plurality of (valid) PDSCHs in a cell in which only one time domain bundling group is configured; multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured; and other DCIs that do not schedule PDSCH (for example, DCI for SPS release, DCI for indicating Scell dormancy, or the like), the C-DAI/T-DAI included in the first sub-codebook is/are a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs in a cell in which only one time domain bundling group is configured; multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured; and other DCIs that do not schedule PDSCH (for example, DCI for SPS release, DCI for indicating Scell dormancy, or the like).

In a case of single-PDSCH scheduling DCIs that schedule PDSCH with HARQ feedback disabled HPN, the C-DAI/T-DAI included in the first sub-codebook may be C-DAI/T-DAI as described in one of the following proposals.

### <Proposal 1>

The C-DAI/T-DAI included in the first sub-codebook may be a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs in a cell in which only one time domain bundling group is configured; multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured; and other DCIs that do not schedule PDSCH (for example, DCI for SPS release, DCI for indicating Scell dormancy, or the like).

### <Proposal 2>

The terminal 20 may ignore C-DAI and T-DAI regardless of the values for the Type-2 HARQ-ACK codebook generation.

### <Option 6-3B>

DCI related to the first sub-codebook may be DCI as described below.
- Single-PDSCH scheduling DCI that schedules PDSCH with HARQ feedback enabled HPN
- Multi-PDSCH scheduling DCI that schedules a plurality of (valid) PDSCHs in a cell in which only one time domain bundling group is configured
- Multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- ACK/NACK for the multi-PDSCH scheduling DCI that schedules only one (valid) PDSCH with HARQ feedback enabled HPN
- NACK for the multi-PDSCH scheduling DCI that schedules only one (valid) PDSCH with HARQ feedback disabled HPN
- Bundled bit(s) indicating ACK/NACK corresponding to a plurality of (valid) PDSCHs that are scheduled by multi-PDSCH scheduling DCI that schedules a plurality of (valid) PDSCHs in a cell in which only one time domain bundling group is configured
- ACK/NACK for PDSCHs scheduled by multi-PDSCH scheduling DCI that schedules a plurality of (valid) PDSCHs including only one PDSCH with HARQ feedback enabled HPN in a cell in which a plurality of time domain bundling groups are configured or in a cell in which the time domain bundling is not configured
- ACK/NACK for DCI indicating SPS release or DCI indicating Scell dormancy (and other DCIs that do not schedule PDSCH)

The C-DAI/T-DAI included in the first sub-codebook may be C-DAI/T-DAI as described below. That is, in a case of: single-PDSCH scheduling DCIs that schedule PDSCH with HARQ feedback enabled HPN; multi-PDSCH scheduling DCIs that schedule only one (valid) PDSCH; multi-PDSCH scheduling DCIs that schedule a plurality of (valid) PDSCHs in a cell in which only one time domain bundling group is configured; multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured; and other DCIs that do not schedule PDSCH (for example, DCI for SPS release, DCI for indicating Scell dormancy, or the like), the C-DAI/T-DAI included in the first sub-codebook is/are a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs in a cell in which only one time domain bundling group is configured; multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured; and other DCIs that do not schedule PDSCH (for example, DCI for SPS release, DCI for indicating Scell dormancy, or the like).

In a case of single-PDSCH scheduling DCIs that schedule PDSCH with HARQ feedback disabled HPN, the C-DAI/T-DAI included in the first sub-codebook may be C-DAI/T-DAI as described in one of the following proposals.

### <Proposal 1>

The C-DAI/T-DAI included in the first sub-codebook may be a number(s) obtained by counting: single-PDSCH scheduling DCIs that schedule PDSCH with HARQ feedback enabled HPN; multi-PDSCH scheduling DCIs that schedule only one (valid) PDSCH with HARQ feedback enabled HPN; multi-PDSCH scheduling DCIs that schedule a plurality of (valid) PDSCHs in a cell in which only one time domain bundling group is configured; multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured; and other DCIs that do not schedule PDSCH (for example, DCI for SPS release, DCI for indicating Scell dormancy, or the like).

### <Proposal 2>

The terminal 20 may ignore C-DAI and T-DAI regardless of the values for the Type-2 HARQ-ACK codebook generation.

### <Option 6-3C>

DCI related to the first sub-codebook may be DCI as described below.
- Single-PDSCH scheduling DCI
- Multi-PDSCH scheduling DCI that schedules only one (valid) PDSCH
- Multi-PDSCH scheduling DCI that schedules a plurality of (valid) PDSCHs in a cell in which only one time domain bundling group is configured
- Multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured
- DCI indicating SPS release or DCI indicating Scell dormancy (and other DCIs that do not schedule PDSCH)

The structure of the first sub-codebook may be a structure as described below.
- ACK/NACK for the single-PDSCH scheduling DCI that schedules PDSCH with HARQ feedback enabled HPN
- NACK for the single-PDSCH scheduling DCI that schedules PDSCH with HARQ feedback disabled HPN
- ACK/NACK for the multi-PDSCH scheduling DCI that schedules only one (valid) PDSCH with HARQ feedback enabled HPN
- ACK/NACK for the multi-PDSCH scheduling DCI that schedules only one (valid) PDSCH with HARQ feedback enabled HPN
- Bundled bit(s) indicating ACK/NACK corresponding to a plurality of (valid) PDSCHs that are scheduled by multi-PDSCH scheduling DCI that schedules a plurality of (valid) PDSCHs in a cell in which only one time domain bundling group is configured
- ACK/NACK for PDSCHs scheduled by multi-PDSCH scheduling DCI that schedules a plurality of (valid) PDSCHs including only one PDSCH with HARQ feedback enabled HPN in a cell in which a plurality of time domain bundling groups are configured or in a cell in which the time domain bundling is not configured
- ACK/NACK for DCI indicating SPS release or DCI indicating Scell dormancy (and other DCIs that do not schedule PDSCH)

Regarding the C-DAI/T-DAI included in the first sub-codebook, in a case of DCI related to the first sub-codebook, the C-DAI/T-DAI included in the first sub-codebook may be a number(s) obtained by counting: single-PDSCH scheduling DCIs that schedule PDSCH; multi-PDSCH scheduling DCIs that schedule only one (valid) PDSCH; multi-PDSCH scheduling DCIs that schedule a plurality of (valid) PDSCHs in a cell in which only one time domain bundling group is configured; multi-PDSCH scheduling DCIs that schedule a plurality of (valid) PDSCHs including only one PDSCH with HARQ feedback enabled HPN in a cell in which a plurality of time domain bundling groups are configured or in a cell in which the time domain bundling is not configured; and other DCIs that do not schedule PDSCH (for example, DCI for SPS release, DCI for indicating Scell dormancy, or the like).

### <Bundling method related to option 6-3>

In a case where the number of bundling groups is configured to be one (1) (that is, the time domain bundling in the first sub-codebook), the terminal 20 may reuse the bundling method related to an option 2.

In addition, in a case where the number of bundling groups is greater than one (1) (that is, the time domain bundling in the second sub-codebook), the terminal 20 may reuse the bundling method related to an option 6-1.

According to an embodiment of the present invention, the Type-2 HARQ-ACK codebook can be generated by using a method that is accompanied by time domain bundling in a case where the multi-PDSCH scheduling and the HARQ feedback disabling are combined.

### (Embodiment 6)

In this embodiment, an example will be described in which the terminal 20 that performs an operation of each option of an embodiment 2 generates the Type-2 HARQ-ACK codebook by using a method that is accompanied by the time domain bundling.

### (Time domain bundling)

The time domain bundling in the Type-1 HARQ-ACK codebook will be described. According to the time domain bundling, HARQ bundling groups are configured for collectively transmitting HARQ-ACKs corresponding to a plurality of PDSCHs.

In a case of the multi-PDSCH scheduling that uses a single DCI, a new RRC parameter (enableTimeDomainHARQ-Bundling, or the like) is introduced. In the RRC parameter, the time domain bundling is configured to be enabled for the Type-1 HARQ-ACK codebook for each serving cell.

In a case where the time domain bundling is enabled by the RRC parameter, in order to determine a set of candidate PDSCH reception occasions, a row index is removed if at least one symbol of every PDSCH associated with the row index is configured as semi-static uplink. It is to be noted that this is similar to the case of slot aggregated PDSCH in release 16.

The pruning procedure in release 16 is performed based on the last configured SLIV of each row index.

The logical AND operation is applied to all of the valid PDSCHs that are associated with the determined candidate PDSCH reception occasions, at least for the one-TB case.

In a case where the parameter, enableTimeDomainHARQ-Bundling is configured, whether or not the terminal 20 assumes that the last scheduled SLIV does not overlap with a semi-static UL symbol is for further study.

### <Terminal operation related to embodiment 6>

With respect to the determined candidate PDSCH reception occasion, in a case where only one SLIV is included in a TDRA row, the terminal 20 may perform an operation of one of the following proposals.

### <Proposal 1>

The terminal 20 may generate ACK/NACK in a case where the SLIV is valid and the HPN is a HARQ feedback enabled HPN. In addition, the terminal 20 may generate NACK in a case where the SLIV is invalid or in a case where the HPN is a HARQ feedback disabled HPN.

### <Proposal 2>

The terminal 20 may generate ACK/NACK in a case where the SLIV is valid. In addition, the terminal 20 may generate NACK in a case where the SLIV is invalid.

In addition, the terminal 20 may perform an operation of one of the following proposals in a case where the TDRA row includes a plurality of SLIVs.

### <Proposal 1>

The terminal 20 may enter ACK/NACK for SLIVs with HARQ feedback enabled HPN in the row. Next, the logical AND operation is applied for bits in the row.

### <Proposal 2>

The terminal 20 may enter ACK/NACK for valid SLIVs. The terminal 20 may enter ACK for invalid SLIVs in the row. Next, the logical AND operation is applied for bits in the row.

In addition, the terminal 20 may perform an operation of one of the following proposals in a case where a TDRA row includes a plurality of SLIVs and each of the SLIVs has a HARQ feedback disabled HPN.

### <Proposal 1>

The terminal 20 may generate NACK for the related candidate PDSCH reception occasions.

### <Proposal 2>

The terminal 20 may enter ACK/NACK for the valid SLIVs. The terminal 20 may enter ACK for invalid SLIVs in the row. Next, the logical AND operation is applied for bits in the row.

According to an embodiment of the present invention, the Type-1 HARQ-ACK codebook can be generated by using a method that is accompanied by time domain bundling in a case where the multi-PDSCH scheduling and the HARQ feedback disabling are combined.

The multi-PDSCH scheduling DCI in an embodiment of the present invention may mean a downlink grant DCI format that includes a TDRA table including a plurality of SLIVs in at least one row.

The multi-PDSCH scheduling DCI in an embodiment of the present invention may mean a downlink grant DCI format that includes a TDRA table including one SLIV in each row.

"Valid PDSCH" may mean a PDSCH that does not collide with an uplink symbol indicated by tdd-UL-DL-ConfigurationCommon or tdd-UL-DL-ConfigurationDedicated.

"Invalid PDSCH" may mean a PDSCH that collides with an uplink symbol indicated by tdd-UL-DL-ConfigurationCommon or tdd-UL-DL-ConfigurationDedicated.

With respect to each option described in each of the above-described embodiments, one of the following may be applied.
- Configured by an upper layer parameter.
- Reported by the terminal 20 as a terminal capability.
- Described in the technical specification.
- Determined by a configuration by the upper layer parameter and the reported terminal capability (combination of the above-described determination methods).

The terminal 20 may transmit, to the base station 10, terminal capability information indicating whether or not the simultaneous configuration of: scheduling of a plurality of PDSCHs; and the HARQ feedback disabling (in the same cell), by a single DCI is supported.

The terminal 20 may transmit, to the base station 10, terminal capability information indicating whether or not the time domain bundling is supported for the simultaneous configuration of: scheduling of a plurality of PDSCHs; and the HARQ feedback disabling (in the same cell), by a single DCI.

The terminal 20 may transmit, to the base station 10, terminal capability information indicating whether or not the Type-1 HARQ-ACK feedback is supported for the simultaneous configuration of: scheduling of a plurality of PDSCHs; and the HARQ feedback disabling (in the same cell), by a single DCI.

The terminal 20 may transmit, to the base station 10, terminal capability information indicating whether or not the Type-2 HARQ-ACK feedback is supported for the simultaneous configuration of: scheduling of a plurality of PDSCHs; and the HARQ feedback disabling (in the same cell), by a single DCI.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only proposed functions in one of the embodiments.

### <Base station 10>

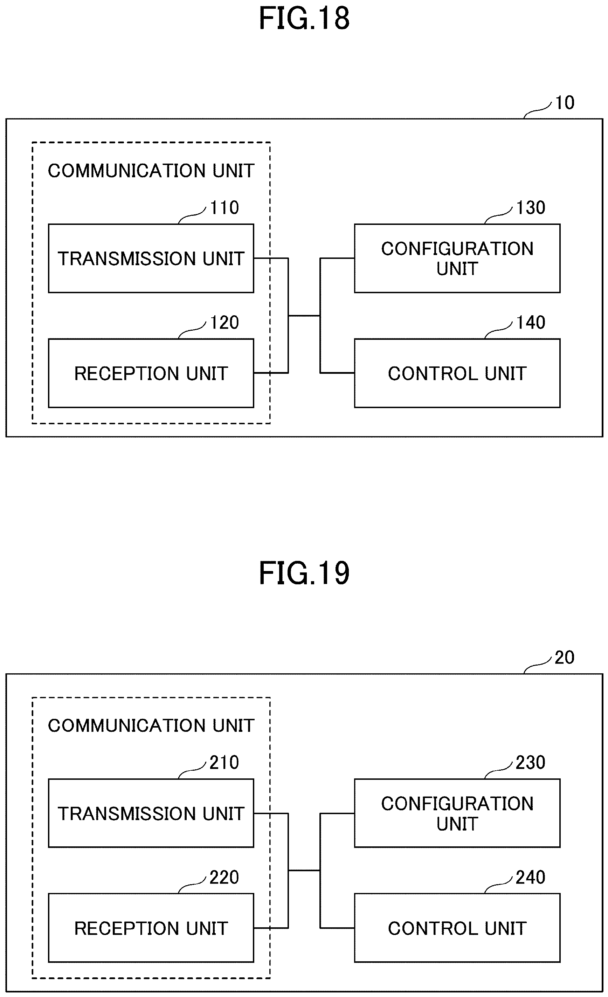

Fig. 18 is a drawing illustrating an example of a functional configuration of the base station. As shown in Fig. 18, the base station 10 includes a transmission unit 110, a reception unit 120, a configuration unit 130, and a control unit 140. The functional configuration illustrated in Fig. 18 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 controls the entire base station 10 including, for example, control of signal transmission and reception. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, re spectively.

### <Terminal 20>

Fig. 19 is a drawing illustrating an example of a functional configuration of the terminal. As shown in Fig. 19, the terminal 20 includes a transmission unit 210, a reception unit 220, a configuration unit 230, and a control unit 240. The functional configuration illustrated in Fig. 19 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20 including control related to signal transmission and reception. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

The terminal or base station according to an embodiment of the present invention may be configured as a terminal or a base station described in the following paragraphs. In addition, a communication method below may be performed.

### <Configuration related to an embodiment of the present invention>

### (First item)

A terminal including:
a reception unit configured to receive, using downlink, control information including information for scheduling a plurality of downlink shared signals and information indicating HARQ-ACK disabling for the downlink shared signals; and
a transmission unit configured to transmit Type-1 HARQ-ACK information based on whether HARQ-ACK is enabled or disabled for each of the downlink shared signals in a case where HARQ-ACK is disabled for one of the plurality of downlink shared signals indicated by the control information.

### (Second item)

The terminal as described in the first item, wherein
the transmission unit transmits the Type-1 HARQ-ACK information based on whether HARQ-ACK is enabled or disabled, the Type-1 HARQ-ACK information being accompanied by time domain bundling.

### (Third item)

A base station including:
a reception unit configured to transmit, to a terminal, control information including information for scheduling a plurality of downlink shared signals and information indicating HARQ-ACK disabling for the downlink shared signals; and
a reception unit configured to receive, from the terminal, Type-1 HARQ-ACK information based on whether HARQ-ACK is enabled or disabled for each of the downlink shared signals in a case where HARQ-ACK is disabled for one of the plurality of downlink shared signals indicated by the control information.

### (Fourth item)

A communication method performed by a terminal, the communication method including:
receiving, using downlink, control information including information for scheduling a plurality of downlink shared signals and information indicating HARQ-ACK disabling for the downlink shared signals; and
transmitting Type-1 HARQ-ACK information based on whether HARQ-ACK is enabled or disabled for each of the downlink shared signals in a case where HARQ-ACK is disabled for one of the plurality of downlink shared signals indicated by the control information.

According to any one of the above-described configurations, a technique is provided that enables a radio communication system to be applied to a high frequency band. According to the second item, the Type-1 HARQ-ACK information accompanied by time domain bundling can be transmitted.

### (Hardware structure)

In the above block diagrams used for describing an embodiment of the present invention (Fig. 18 and Fig. 19), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

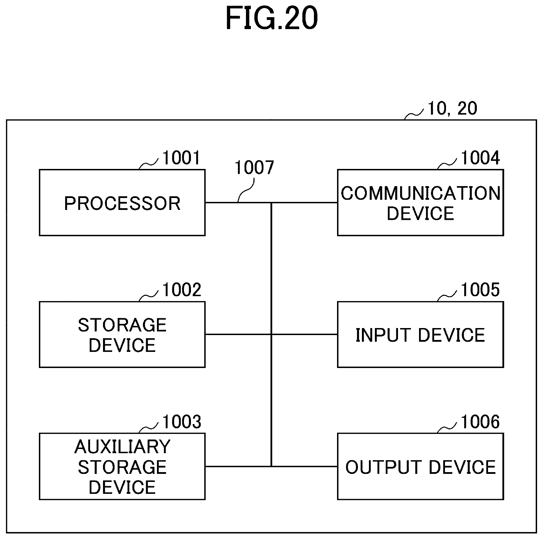

For example, the base station 10, the terminal 20, etc., according to an embodiment of the present disclosure may function as a computer for processing the radio communication method of the present disclosure. Fig. 20 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may be configured without including some of the devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 18 may be realized by control programs that are stored in the storage device 1002 and are executed by the processor 1001. Further, for example, the control unit 240 of the terminal 20 illustrated in Fig. 19 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

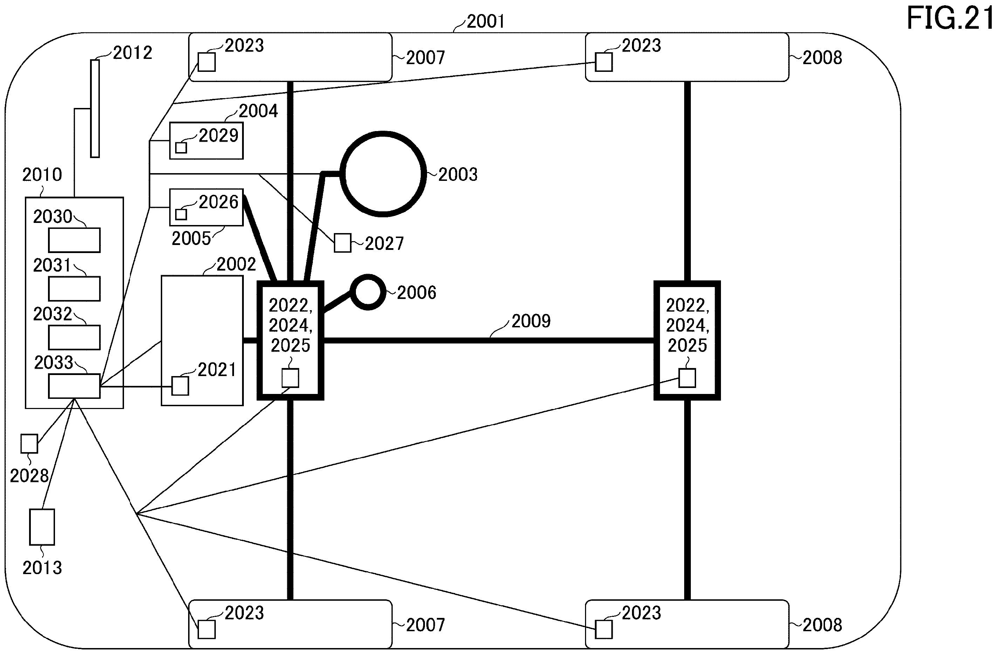

Fig. 21 shows an example of a configuration of a vehicle 2001. As shown in Fig. 21, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive, using downlink, control information including information for scheduling a plurality of downlink shared signals and information indicating HARQ-ACK disabling for the downlink shared signals; and
a transmission unit configured to transmit Type-1 HARQ-ACK information based on whether HARQ-ACK is enabled or disabled for each of the downlink shared signals in a case where HARQ-ACK is disabled for one of the plurality of downlink shared signals indicated by the control information.

2. The terminal as claimed in claim 1, wherein
the transmission unit transmits the Type-1 HARQ-ACK information based on whether HARQ-ACK is enabled or disabled, the Type-1 HARQ-ACK information being accompanied by time domain bundling.

3. A base station comprising:
a reception unit configured to transmit, to a terminal, control information including information for scheduling a plurality of downlink shared signals and information indicating HARQ-ACK disabling for the downlink shared signals; and
a reception unit configured to receive, from the terminal, Type-1 HARQ-ACK information based on whether HARQ-ACK is enabled or disabled for each of the downlink shared signals in a case where HARQ-ACK is disabled for one of the plurality of downlink shared signals indicated by the control information.

4. A communication method performed by a terminal, the communication method comprising:
receiving, using downlink, control information including information for scheduling a plurality of downlink shared signals and information indicating HARQ-ACK disabling for the downlink shared signals; and
transmitting Type-1 HARQ-ACK information based on whether HARQ-ACK is enabled or disabled for each of the downlink shared signals in a case where HARQ-ACK is disabled for one of the plurality of downlink shared signals indicated by the control information.
